# EUROPEAN PATENT APPLICATION

(11) **EP 4 850 902 A1**
(43) Date of publication of application: **09.12.2026**
(21) Application number: 25748653.0
(22) Date of filing: 29.01.2025
(51) Int. Cl.: B32B 7/023, B32B 7/12, B32B 17/10, B32B 27/00, B32B 27/04, B60K 35/23, C09D 201/00, C09J 7/22, C09J 7/29, C09J 7/30, C09J 201/00, G02B 1/10, G02B 1/14, G02B 5/08, G02B 5/26, G02B 5/30, G02B 27/01

(54) **LAMINATE, BONDED ARTICLE, IMAGE DISPLAY SYSTEM, AND METHOD FOR PRODUCING BONDED ARTICLE**

(30) Priority: 01.02.2024 JP 2024014050; 21.03.2024 JP 2024044867; 19.07.2024 JP 2024115908; 13.09.2024 JP 2024159072; 21.10.2024 JP 2024185084
(71) Applicant: FUJIFILM Corporation, Tokyo 106-8620 (JP)
(72) Inventor: UEKI Keigo, Minamiashigara-shi, Kanagawa 250-0193 (JP); ARITA Shusuke, Minamiashigara-shi, Kanagawa 250-0193 (JP); WATANABE Shinya, Minamiashigara-shi, Kanagawa 250-0193 (JP); KUDO Kotaro, Minamiashigara-shi, Kanagawa 250-0193 (JP)
(74) Representative: HGF
(86) International application number: PCT/JP2025/002743
(87) International publication number: WO 2025/164649

(57) **Abstract**

An object of the present invention is to provide a laminate capable of suppressing occurrence of air bubble-like defects even in a case where a foreign substance is present between an adhesive layer and an adherend, a bonded body using the laminate, an image display system using the laminate, and a manufacturing method of a bonded body in which the laminate is bonded to the adherend. The laminate of the present invention is a laminate including a base material and an adhesive layer, in which an oxygen permeability coefficient of the base material is 300 cc/m²·day·atm or less.

## Description

### BACKGROUND OF THE INVENTION

### 1. Field of the Invention

The present invention relates to a laminate having a resin base material and an adhesive layer, a bonded body obtained by bonding the laminate to an adherend, an image display system using the laminate, and a manufacturing method of a bonded body.

### 2. Description of the Related Art

Recently, it is known as a so-called head-up display or head-up display system for providing various pieces of information such as maps, traveling speed, or vehicle conditions to a driver or the like by projecting images on a windshield glass of a vehicle or other moving objects.

With the head-up display system, virtual images of images including the above described various pieces of information projected on the windshield glass are observed by the driver or the like. An image formation position of the virtual image is located in front of the vehicle's outer side with respect to the windshield glass.

The image formation position of the virtual image is usually located on a front side with respect to the windshield glass by 1000 mm or more, and is located on an outer side with respect to the windshield glass. As a result, the driver can obtain the above-described various types of information without moving the line of sight greatly while looking at the outside in front, and thus it is expected that the driver can drive more safely while obtaining the various types of information in a case where the head-up display system is used.

The head-up display system is configured, for example, by mounting a reflection film having light transmittance, such as a half mirror film, on the windshield glass to form a projected image display unit. Various reflection films have been proposed.

For example, WO2021/039394A proposes an optical film which can be used as a display medium in a head-up display system, the optical film including an optical functional layer and a block layer, in which the block layer has a cured product of a resin composition including a thermoplastic resin and an ultraviolet curable resin.

In this optical film, examples of the optical functional layer include a 1/2 wave plate, a 1/4 wave plate, a laminate of a 1/2 wave plate and a circularly polarization reflection layer, and a laminate of a 1/4 wave plate and a circularly polarization reflection layer. In addition, examples of the circularly polarization reflection layer include a light reflective layer formed of a cholesteric liquid crystal.

### SUMMARY OF THE INVENTION

As shown in WO2021/039394A, the reflection film used in the head-up display system is used by being bonded to glass such as a windshield glass.

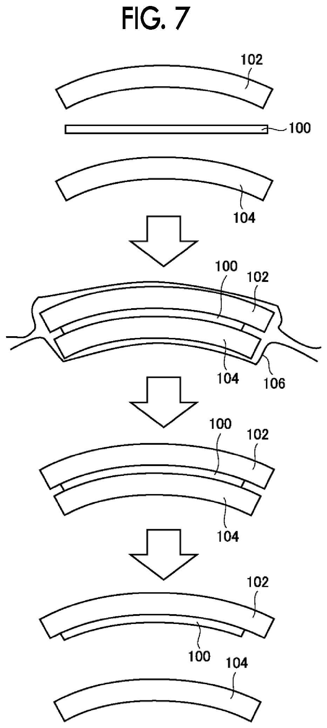

As a method of bonding a sheet-like material such as a reflection film to an adherend such as a windshield glass, a method conceptually shown in FIG. 7 using thermocompression bonding using an adhesive layer is known.

In this bonding method, first, as shown in the upper part of FIG. 7, a laminate 100 such as a reflection film, in which an adhesive layer (not shown) is laminated, is disposed on an adherend 102 having a curved surface such as a windshield glass, and accommodated in a bag 106 such as a rubber bag as shown in the second stage of FIG. 7.

Next, the laminate 100 (adhesive layer) is vacuum heat-pressure bonded to the adherend 102 by heating the inside of the bag 106 while reducing the pressure.

After the pressure bonding using the bag is completed, a bonded body obtained by bonding the laminate 100 to the adherend 102 is taken out from the bag, and the bonded body is heat-pressure bonded using an autoclave as shown in the third stage of FIG. 7, and the laminate 100 is further heat-pressure bonded to the adherend 102.

After the heat-pressure bonding using the autoclave is completed, as shown in the lower part of FIG. 7, the bonded body is taken out from the autoclave, and a bonded body obtained by bonding the laminate 100 to the adherend 102 can be obtained.

That is, according to this bonding method, a laminate such as a reflection film having an adhesive layer can be bonded along the surface of an adherend such as a glass plate.

On the other hand, in this bonding method, there is a problem in that visibility is reduced due to air bubble-like defects caused by bonding while foreign substances such as dust adhering to the adhesive layer or the surface of the adherend are sandwiched between the adhesive layer and the adherend, and a bonded body or a bonding method with fewer air bubble-like defects is desired.

Therefore, an object of the present invention is to solve the above-described problem of the related art, and to provide a laminate capable of suppressing occurrence of air bubble-like defects even in a case where a foreign substance is present between an adhesive layer and an adherend, a bonded body using the laminate, an image display system using the laminate, and a manufacturing method of a bonded body, in which the laminate is bonded to the adherend.

As a result of intensive studies to achieve the above-described object, the present inventors have found that, in a case where a laminate having a base material and an adhesive layer, which satisfies a predetermined oxygen permeability coefficient, is used for bonding to an adherend, the occurrence of air bubble-like defects can be suppressed even in a case where foreign substances are present between the adhesive layer and the adherend, and have completed the present invention.

That is, the present inventors found that the above-described object can be achieved by employing the following configurations.

[1] A laminate comprising: a base material; and an adhesive layer, in which an oxygen permeability coefficient of the base material is 300 cc/m²·day·atm or less.
[2] The laminate according to [1], in which a film thickness of the adhesive layer is 0.1 µm or more.
[3] The laminate according to [1] or [2], in which a bending stiffness coefficient S represented by Equation 1 is 0.4 × 10⁶ [GPa·µm³] or more. 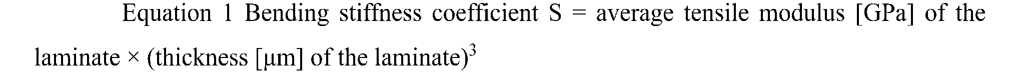 Bending stiffness coefficient S = average tensile modulus [GPa] of the laminate × (thickness [µm] of the laminate)3 Equation 1
[4] The laminate according to any one of [1] to [3], in which the base material includes a protective film and a transparent resin layer.
[5] The laminate according to any one of [1] to [4], in which the base material further includes a reflective layer.
[6] The laminate according to any one of [1] to [5], in which the base material further includes a retardation layer.
[7] The laminate according to any one of [1] to [6], in which the base material further includes a polarization conversion layer.
[8] The laminate according to any one of [1] to [7], in which the base material further includes a hard coat layer.
[9] The laminate according to any one of [1] to [4], in which the base material further includes a hard coat layer, a reflective layer, a retardation layer, and a polarization conversion layer.
[10] The laminate according to any one of [1] to [9], in which the base material includes at least a resin base material.
[11] The laminate according to any one of [1] to [10], in which the adhesive layer includes an antistatic agent.
[12] The laminate according to [11], in which a surface electrical resistance value of the adhesive layer is 1.0 × 10¹⁴ Ω/□ or less.
[13] The laminate according to any one of [1] to [12], in which the laminate is bonded to glass through the adhesive layer.
[14] The laminate according to any one of [1] to [12], in which the laminate is bonded to a windshield glass through the adhesive layer.
[15] A bonded body comprising: glass; and the laminate according to any one of [1] to [12] that is bonded to the glass.
[16] The bonded body according to [15], further including glass on a side of the laminate opposite to a side to which the glass is bonded.
[17] A bonded body comprising: a windshield glass; and the laminate according to any one of [1] to [12] that is bonded to the windshield glass.
[18] The bonded body according to [17], further including windshield glass on a side of the laminate opposite to a side to which the windshield glass is bonded.
[19] An image display system comprising: the laminate according to any one of [1] to [12]; and an image display device that projects an image onto the laminate.
[20] A manufacturing method of a bonded body, comprising:
   a step 1 of laminating an adherend having a curved shape and the laminate according to any one of [1] to [12] such that the adhesive layer of the laminate is on a side of the adherend, accommodating the adherend and the laminate in a bag, and reducing a pressure in the bag to obtain a bonded body by causing the laminate to follow the curved shape without using a mold having a surface corresponding to the curved shape; and
   a step 2 of thermocompression-bonding the bonded body obtained in the step 1.

According to the present invention, it is possible to provide a laminate which can be bonded to an adherend by suppressing the occurrence of air bubble-like defects after bonding.

### BRIEF DESCRIPTION OF THE DRAWINGS

FIG. 1 is a view conceptually showing an example of a laminate according to the present invention.
FIG. 2 is a conceptual view for describing a manufacturing method of a bonded body according to the present invention.
FIG. 3 is a conceptual view for describing the manufacturing method of the bonded body according to the present invention.
FIG. 4 is a view conceptually showing an example of an image display system according to the present invention.
FIG. 5 is a partial enlarged view of FIG. 4.
FIG. 6 is a schematic cross-sectional view showing an example of the bonded body according to the present invention.
FIG. 7 is a conceptual view for describing a manufacturing method of a bonded body in the related art.

### DESCRIPTION OF THE PREFERRED EMBODIMENTS

Hereinafter, a laminate, a bonded body, an image display system, and a manufacturing method of a bonded body according to the present invention will be described in detail based on suitable examples shown in the accompanying drawings.

The drawings described below are conceptual drawings for describing the present invention, and the present invention is not limited to the drawings shown below. Therefore, the size, shape, and positional relationship of each member, the thickness of each layer in the laminate, the thickness relationship between the layers, and the like are different from the actual ones.

In addition, in the following description, a numerical range indicated by "to" includes numerical values described on both sides. For example, ε₁ is a numerical value α₁ to a numerical value β₁ means that a range of ε₁ is a range including the numerical value α₁ and the numerical value β₁, and is represented as α₁ ≤ ε₁ ≤ β₁ by mathematical signs.

In addition, in a range of numerical values described in stages in the present specification, the upper limit value or the lower limit value described in a certain range of numerical values may be replaced with an upper limit value or a lower limit value of the range of numerical values described in other stages.

In addition, regarding the numerical range described in the present specification, an upper limit value or a lower limit value described in a numerical value may be replaced with a value described in Examples.

### [Laminate]

The laminate according to the embodiment of the present invention includes a base material and an adhesive layer.

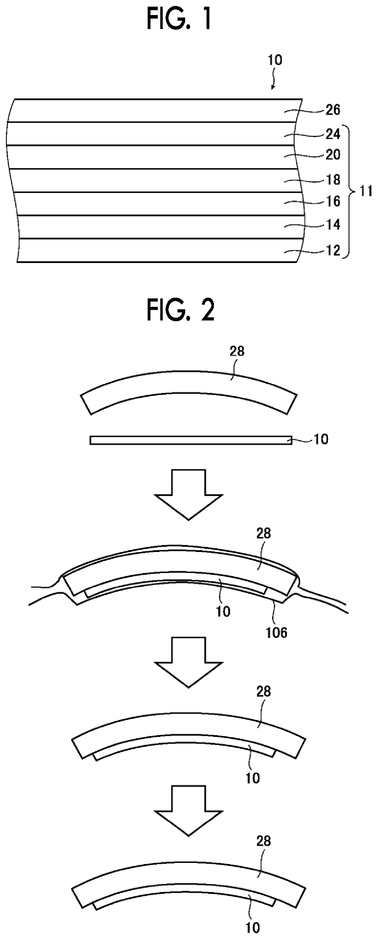

FIG. 1 conceptually shows an example of the laminate according to the embodiment of the present invention.

A laminate 10 in the example shown in the drawing includes a protective film 12, a hard coat layer 14, a transparent resin layer 16, a retardation layer 18, a reflective layer 20, a polarization conversion layer 24, and an adhesive layer 26 from the lower side in the drawing. The protective film 12 to the polarization conversion layer 24 in the drawing correspond to a base material 11 in the laminate 10.

That is, the base material included in the laminate according to the embodiment of the present invention refers to all layer configurations (however, excluding the adherend) other than the adhesive layer constituting one surface of the laminate, and for example, even in a case where the adhesive layer is provided between the retardation layer 18 and the reflective layer 20, the adhesive layer is a layer configuration included in the base material.

In addition, the base material included in the laminate according to the embodiment of the present invention is a concept in which glass is not included because the laminate according to the embodiment of the present invention is suitable for a bonding application to glass.

In the laminate according to the embodiment of the present invention, since the oxygen permeability coefficient of the base material is 300 cc/m²·day·atm or less, it is possible to suppress the occurrence of air bubble-like defects in a case of being bonded to the adherend.

Here, the reason why the occurrence of air bubble-like defects can be suppressed is not clear in detail, but the present inventors have presumed as follows.

First, the present inventors have studied the cause of the fact that the occurrence of air bubble-like defects cannot be suppressed in the related art, and presumed that the reason is that, in a case of thermocompression bonding (for example, autoclave treatment) in a case of producing a bonded body, air permeates or dissolves from the surface of the base material on the side opposite to the adhesive layer, and the amount of dissolved air in the base material and the adhesive layer is increased, and thus the air around the foreign substance is not absorbed by the adhesive layer or the base material.

Therefore, in the present invention, it is presumed that, by using the base material having an oxygen permeability coefficient of 300 cc/m²·day·atm or less, the increase in the amount of dissolved air in the base material and the adhesive layer is suppressed in a case of thermocompression bonding in a case of producing a bonded body, and thus the air around the foreign substance can be taken into the adhesive layer or the base material, and thus the occurrence of air bubble-like defects can be suppressed.

In the present invention, the oxygen permeability coefficient of the base material is 300 cc/m²·day·atm or less, preferably 200 cc/m²·day·atm or less, more preferably 150 cc/m²·day·atm or less, and still more preferably 100 cc/m²·day·atm or less. In particular, the oxygen permeability coefficient is preferably 15 cc/m²·day·atm or less, more preferably 10 cc/m²·day·atm or less, and still more preferably 2 cc/m²·day·atm or less.

The lower limit of the oxygen permeability coefficient of the base material is not limited, but is preferably 1 × 10⁻¹⁵ cc/m²·day·atm or more, and more preferably 1 × 10⁻² cc/m²·day·atm or more. By setting the oxygen permeability coefficient to the above-described value or more, it is possible to suppress the air remaining between the adhesive layer and the adherend after thermocompression bonding.

In the laminate according to the embodiment of the present invention, it is preferable that a bending stiffness coefficient S represented by Equation 1 is 0.4 × 10⁶ [GPa·µm³] or more. 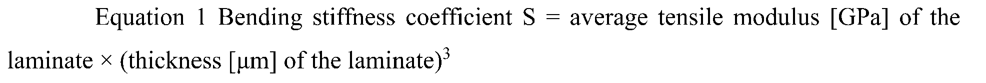 Bending stiffness coefficient S = average tensile modulus [GPa] of the laminate × (thickness [µm] of the laminate)3 Equation 1

Here, the average tensile modulus for calculating the bending stiffness coefficient S may be measured by a method described in Examples later.

A specific method will be described in detail in Examples, but in a case of measuring the average tensile modulus, first, a sample piece having a predetermined size in which a length direction is along each direction rotated by 45° clockwise from one direction with respect to one direction in an in-plane direction of the laminate as a reference is cut out. Next, the cut-out sample piece is installed in a tensile tester such that a chuck interval in a measurement direction is 100 mm, and the sample piece is stretched at a stretching speed of 300 mm/min under a condition of a measurement temperature of 25°C such that the chuck interval is widened, thereby obtaining a stress-strain curve. The tensile modulus is calculated by linear regression of the obtained curve. In a case where, among the tensile moduli of the above-described sample pieces, an in-plane direction of the laminate corresponding to the length direction of the sample piece exhibiting the maximum tensile modulus is defined as a first direction, and a direction orthogonal to the first direction is defined as a second direction, an average value of the tensile modulus in the first direction and the tensile modulus in the second direction is defined as the average tensile modulus of the laminate.

In addition, a specific method will be described in detail in Examples, but in a case of measuring the average thermal shrinkage rate, first, a sample piece having a predetermined size in which a length direction is along each direction rotated by 45° clockwise from one direction with respect to one direction in an in-plane direction of the laminate as a reference is cut out. Next, two reference lines are drawn on the cut-out sample piece in a width direction such that an interval between the reference lines is 100 mm in advance. The sample piece is allowed to stand in a heating oven at 140°C under no tension for 45 minutes, and then cooled to room temperature, and the interval between the two reference lines is measured. The thermal shrinkage rate of the sample piece is measured from the interval before the treatment and the interval after the treatment. In a case where, among the thermal shrinkage rates of the above-described sample pieces, an in-plane direction of the laminate corresponding to the length direction of the sample piece exhibiting the maximum thermal shrinkage rate is defined as a first direction, and a direction orthogonal to the first direction is defined as a second direction, an average value of the thermal shrinkage rate in the first direction and the thermal shrinkage rate in the second direction is defined as the average thermal shrinkage rate of the laminate.

The lower limit of the above-described average tensile modulus is not particularly limited, but is preferably 0.01 GPa or more and more preferably 0.1 GPa or more. The upper limit of the above-described average tensile modulus is not particularly limited, but is preferably 10.0 GPa or less and more preferably 8.0 GPa or less.

The lower limit of the thickness of the laminate is not particularly limited, but is preferably 100 µm or more and more preferably 150 µm or more. The upper limit of the thickness of the laminate is not particularly limited, but is preferably 1,000 µm or less and more preferably 400 µm or less.

The thickness (film thickness) of the laminate may be measured by a method described in Examples later.

### [Base Material]

The base material 11 included in the laminate according to the embodiment of the present invention is not particularly limited as long as the base material has an oxygen permeability coefficient of 300 cc/m²·day·atm or less, and may be a base material consisting of only one layer or a base material consisting of a plurality of layers.

Suitable examples of such a base material include a protective film, a hard coat layer, a transparent resin layer, a retardation layer, a reflective layer, an interlayer, and a polarization conversion layer, and among these, it is preferable that the base material includes at least a resin base material (that is, a film or a layer containing 50% by mass or more of a resin material).

### <Protective Film>

The base material 11 included in the laminate according to the embodiment of the present invention may include a protective film 12.

In a case where the base material 11 has the protective film 12, it is desirable that the base material further includes a transparent resin layer 16.

The protective film 12 is applied to a surface opposite to the adhesive layer 26 as shown in FIG. 1.

The protective film 12 may be laminated in a case of performing an autoclave treatment, and for example, may be laminated before thermocompression bonding or may be laminated before an autoclave treatment after thermocompression bonding.

The protective film 12 may be peeled off at a stage where the protective film 12 is no longer necessary after the autoclave treatment.

In addition, the protective film 12 may be peeled off before the heat treatment as long as the oxygen permeability coefficient of the base material satisfies the above-described requirement. In a case where the protective film 12 is peeled off before the heat treatment, it is preferable that the protective film 12 is peeled off after the laminate is disposed on the adherend because the base material can be protected from adhesion of foreign matter and scratches.

Examples of a material of the protective film 12 include resins such as a polyethylene-based resin, a polypropylene-based resin, a polystyrene-based resin, and a polyethylene terephthalate-based resin; and elastomers such as nitrile-based rubber such as acrylonitrile-butadiene rubber, butyl rubber, acrylic rubber, thermoplastic elastomers such as a thermoplastic polyolefin elastomer (TPO), a thermoplastic polyurethane elastomer (TPU), a thermoplastic polyester elastomer (TPEE), a thermoplastic polyamide elastomer (TPAE), and a diene-based elastomer (1,2-polybutadiene), a silicone-based elastomer, and a fluorine-based elastomer. A film obtained by molding one kind or two or more kinds of these in a single layer or a multilayer can be used as the protective film 12.

The material of the protective film is not particularly limited as long as the oxygen permeability coefficient of the base material satisfies the above-described requirement, but from the viewpoint of the oxygen permeability coefficient, a polyethylene terephthalate-based resin is preferable.

The thickness of the protective film 12 is not particularly limited as long as the oxygen permeability coefficient of the base material satisfies the above-described requirement, but is preferably 25 µm or more, more preferably 75 µm or more, and still more preferably 125 µm or more. The upper limit value thereof is not particularly limited, but is usually 500 µm or less.

It is preferable that the protective film 12 has the above-described thickness because the laminate is easily handled.

The tensile modulus of the protective film 12 is not particularly limited, but is preferably 0.001 GPa or more, more preferably 0.01 GPa or more, still more preferably 0.1 GPa or more, and particularly preferably 1.0 GPa or more. The upper limit value thereof is not particularly limited, but is usually 12.0 GPa or less.

The tensile modulus of the protective film 12 can be changed depending on, for example, the material constituting the protective film 12, and in general, the tensile modulus tends to be increased by increasing the molecular weight and/or the degree of crystallinity of the resin or the elastomer. In addition, in the protective film 12, the tensile modulus in the stretching direction can be increased by stretching. Even in a case where the protective film 12 consists of a multilayer, the tensile modulus means the tensile modulus of the protective film.

It is desirable that the protective film 12 thermally contracts.

In general, the protective film 12 also includes a process of being stretched in the production, and stress due to the stretching is present as residual stress. Therefore, the residual stress can be utilized to induce thermal contraction during the curved surface following through heating.

The temperature at which the protective film 12 thermally contracts varies depending on the material of the protective film 12, but the protective film 12 preferably contracts in a range of 80°C to 200°C and more preferably contracts in a range of 90°C to 140°C which is a heating treatment temperature in a general curved surface following process.

The protective film 12 may have a pressure-sensitive adhesive layer on at least one surface, or may be a self-adhesive protective film having pressure-sensitive adhesiveness.

The protective film 12 may have an inorganic substance such as silica or alumina vapor-deposited thereon in order to reduce the oxygen permeability coefficient of the base material, and one or more overcoats may be further formed on the vapor-deposited surface.

### <Hard Coat Layer>

The base material 11 included in the laminate according to the embodiment of the present invention may include a hard coat layer (HC layer) 14.

By including the HC layer 14, abrasion resistance that is less likely to be scratched even in a case where a hard substance is rubbed, scratch resistance that is less likely to be scratched even in a case where a hard substance is pushed in, antifouling property that allows easy wiping of dirt even in a case where dirt adheres, and the like are obtained.

It is preferable that the HC layer 14 is obtained by polymerizing and curing at least one compound selected from the group consisting of a polysiloxane-containing compound having a polymerizable group in the molecule and a fluorine-containing compound having a polymerizable group in the molecule, and a polymerizable compound having a polymerizable group in the molecule, other than these compounds, which will be described later; and it is more preferable that the polymerizable groups are radically polymerizable groups. As a result, in the HC layer 14, the compound selected from the group consisting of the polysiloxane-containing compound and the fluorine-containing compound and the polymerizable compound forming the HC layer 14 are present in a bonded state, thereby imparting more excellent antifouling property. In a case where the compound selected from the group consisting of the polysiloxane-containing compound and the fluorine-containing compound has a polymerizable group, the polymerizable group in the compound selected from the group consisting of the polysiloxane-containing compound and the fluorine-containing compound, which will be described later, reacts to form a bond and is present in the HC layer 14 in a bonded state.

In a case where the HC layer 14 has a laminated structure of two or more layers described later, the compound selected from the group consisting of the polysiloxane-containing compound and the fluorine-containing compound is preferably included in at least the HC layer farthest from the transparent resin layer 16, and more preferably included only in the HC layer farthest from the transparent resin layer 16. In a case where at least one compound selected from the group consisting of a polysiloxane-containing compound having a polymerizable group in the molecule and a fluorine-containing compound having a polymerizable group in the molecule is used, the HC layer 14 farthest from the transparent resin layer 16 is preferably at least a cured film of the above compound, and the HC layer 14 farthest from the transparent resin layer 16 is more preferably only a cured film of the above compound.

Hereinafter, a specific aspect of the HC layer 14 will be described, but the present invention is not limited to the following aspect.

The fluorine-containing compound is not particularly limited as long as it can impart rub resistance and antifouling property to the HC layer 14, and a compound having a fluorine atom in the molecule can be used. As the fluorine-containing compound, a fluorine-containing antifouling agent having properties of an antifouling agent is preferably used.

The fluorine-containing compound may be any of a monomer, an oligomer, or a polymer. The fluorine-containing compound preferably has a substituent which contributes to formation of a bond with other components (for example, the polysiloxane-containing compound, a polymerizable monomer which is a constituent component of the resin, and a resin) or compatibility with the other components in the HC layer 14. These substituents may be the same or different from each other, and it is preferable that the compound have a plurality of substituents.

The substituent is preferably a polymerizable group, and may be a polymerizable reactive group exhibiting any of radical polymerization properties, polycondensation properties, cationic polymerization properties, anionic polymerization properties, or addition polymerization properties. Preferred examples of the substituent include an acryloyl group, a methacryloyl group, a vinyl group, an allyl group, a cinnamoyl group, an epoxy group, an oxetanyl group, a hydroxyl group, a polyoxyalkylene group, a carboxyl group, and an amino group. Among these, a radically polymerizable group is preferable, and an acryloyl group or a methacryloyl group is more preferable.

The fluorine-containing compound may be a polymer or an oligomer with a compound not containing a fluorine atom.

The polysiloxane-containing compound in the present invention is not particularly limited, and examples thereof include compounds having a polysiloxane structure in the molecule.

The polysiloxane structure included in the polysiloxane-containing compound may be linear, branched, or cyclic.

As the polysiloxane-containing compound, a polysiloxane antifouling agent having properties of the antifouling agent is preferably used.

A content of the polysiloxane-containing compound in the curable composition for forming an HC layer, which is used for forming the HC layer 14, is preferably 0.01% to 5% by mass, more preferably 0.1% to 5% by mass, still more preferably 0.5% to 5% by mass, and particularly preferably 0.5% to 2% by mass with respect to the total solid content of the curable composition for forming an HC layer.

In a case where the HC layer 14 has a laminate structure of two or more layers to be described later, it means an addition amount in the curable composition for forming an HC layer, which forms the HC layer 14 containing the polysiloxane-containing compound.

The HC layer 14 can be obtained by irradiating the curable composition for forming an HC layer with active energy rays and curing the curable composition for forming an HC layer. In the present specification, the "active energy rays" refers to ionizing radiation, and includes X-rays, ultraviolet rays, visible rays, infrared rays, electron beams, α-rays, β-rays, γ-rays, and the like.

The curable composition for forming the HC layer 14 used for forming the HC layer contains at least one component (hereinafter, also referred to as an "active energy ray-curable component") having a property of being cured by irradiation with active energy rays. The active energy ray-curable component is preferably at least one polymerizable compound selected from a radically polymerizable compound and a cationically polymerizable compound. In the present specification, the "polymerizable compound" is a compound having a polymerizable group in a molecule, and it is sufficient that the number of polymerizable groups is one or more in one molecule. The polymerizable group is a group that can participate in a polymerization reaction, and specific examples thereof include groups contained in various polymerizable compounds to be described later. In addition, examples of the polymerization reaction include various polymerization reactions such as radical polymerization, cationic polymerization, and anionic polymerization.

In addition, it is preferable that the HC layer 14 is obtained by irradiating the curable composition for forming the HC layer, which contains at least one compound selected from the group consisting of a polysiloxane-containing compound having a polymerizable group in the molecule and a fluorine-containing compound having a polymerizable group in the molecule, and a polymerizable compound having a polymerizable group in the molecule, other than these compounds, with active energy rays to polymerize and cure the curable composition. In this case, the polymerizable groups included in the polysiloxane-containing compound, the fluorine-containing compound, and the polymerizable compound are more preferably radically polymerizable groups.

The HC layer 14 may have a one-layer structure or a laminated structure of two or more layers, and an HC layer having a one-layer structure or a laminated structure of two or more layers, which will be described in detail below, is preferable.

Preferred aspects of the curable composition for forming an HC layer for forming the HC layer having a one-layer structure include, as a first aspect, a curable composition for forming an HC layer containing at least one polymerizable compound having two or more ethylenically unsaturated groups in one molecule. The ethylenically unsaturated group refers to a functional group containing an ethylenically unsaturated double bond. In addition, examples thereof also include, as a second aspect, a curable composition for forming an HC layer, containing at least one radically polymerizable compound and at least one cationically polymerizable compound.

The curable composition for forming the HC layer preferably contains a polymerization initiator, and more preferably contains a photopolymerization initiator. The curable composition for forming the HC layer, which contains the radically polymerizable compound, preferably contains a radical photopolymerization initiator; and the curable composition for forming the HC layer, which contains the cationically polymerizable compound, preferably contains a cationic photopolymerization initiator. For the radical photopolymerization initiator, one kind may be used alone, or two or more kinds with different structures may be used in combination. The same also applies to the cationic photopolymerization initiator.

Hereinafter, each of the photopolymerization initiators will be described in order.

As the radical photopolymerization initiator, known radical photopolymerization initiators may be used without particular limitation, as long as the initiators can generate radicals as active species by light irradiation.

The radical photopolymerization initiator and auxiliary agent can be synthesized by known methods, and are available as commercially available products. Preferred examples of commercially available radical photopolymerization initiators include IRGACURE (127, 651, 184, 819, 907, 1870 (CGI-403/Irg 184 = 7/3 mixing initiator), 500, 369, 1173, 2959, 4265, 4263, and OXE 01), and the like manufactured by BASF SE; KAYACURE (DETX-S, BP-100, BDMK, CTX, BMS, 2-EAQ, ABQ, CPTX, EPD, ITX, QTX, BTC, MCA, and the like) manufactured by Nippon Kayaku Co., Ltd.; and Esacure (KIP100F, KB1, EB3, BP, X33, KT046, KT37, KIP150, and TZT) manufactured by Sartomer Arkema Inc.

A content of the radical photopolymerization initiator in the curable composition for forming the HC layer described above may be appropriately adjusted within a range in which the polymerization reaction (radical polymerization) of the radically polymerizable compound favorably proceeds, and the content is not particularly limited. The content is preferably 0.1 to 20 parts by mass, more preferably 0.5 to 10 parts by mass, and still more preferably 1 to 10 parts by mass with respect to 100 parts by mass of the radically polymerizable compound contained in the curable composition for forming the HC layer described above.

As the cationic photopolymerization initiator, known cationic photopolymerization initiators can be used without particular limitation, as long as the initiators can generate cations as active species by light irradiation.

As the cationic photopolymerization initiator, from the viewpoint of sensitivity of the photopolymerization initiator with respect to light, stability of the compound, and the like, a diazonium salt, an iodonium salt, a sulfonium salt, or an iminium salt is preferable. In addition, from the viewpoint of weather fastness, an iodonium salt is preferable.

Specific examples of commercially available products of the iodonium salt-based cationic photopolymerization initiator include B2380 manufactured by TOKYO CHEMICAL INDUSTRY CO., LTD.; BBI-102 manufactured by Midori Kagaku Co., Ltd.; WPI-113, WPI-124, WPI-169, and WPI-170 manufactured by Wako Pure Chemical Industries, Ltd.; and DTBPI-PFBS manufactured by Toyo Gosei Co., Ltd.

In addition, specific examples of iodonium salt compounds which can be used as the cationic photopolymerization initiator include the following compounds PAG-1 and PAG-2.

Cationic photopolymerization initiator (iodonium salt compound) PAG-1

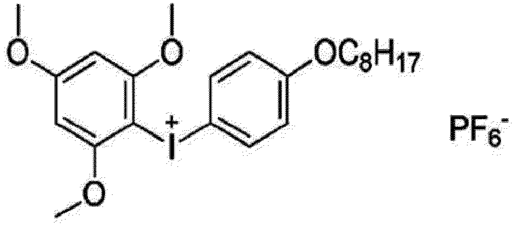

Cationic photopolymerization initiator (iodonium salt compound) PAG-2

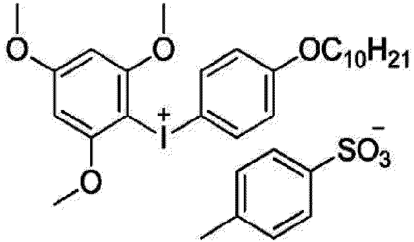

A content of the cationic photopolymerization initiator in the curable composition for forming an HC layer may be appropriately adjusted within a range in which the polymerization reaction (cationic polymerization) of the cationically polymerizable compound favorably proceeds, and the content is not particularly limited. The content is preferably 0.1 to 200 parts by mass, more preferably 1 to 150 parts by mass, and still more preferably 2 to 100 parts by mass with respect to 100 parts by mass of the cationically polymerizable compound.

Examples of other photopolymerization initiators include photopolymerization initiators described in paragraphs 0052 to 0055 of JP2009-204725A, the contents of which are incorporated into the present invention.

### -Component which Can Be Optionally Contained in Curable Composition for Forming HC Layer-

The curable composition for forming the HC layer contains at least one component having a property of being cured by irradiation with active energy rays and a compound selected from the group consisting of a polysiloxane-containing compound and a fluorine-containing compound; and can optionally contain at least one polymerization initiator, preferably contains the at least one polymerization initiator. The details thereof are as described above.

The curable composition for forming an HC layer also preferably contains a solvent.

As the solvent, an organic solvent is preferable, and one kind or two or more kinds can be mixed and used at an arbitrary ratio. Specific examples of the organic solvent include alcohols such as methanol, ethanol, propanol, n-butanol, and i-butanol; ketones such as acetone, methyl isobutyl ketone, methyl ethyl ketone, and cyclohexanone; cellosolves such as ethyl cellosolve; aromatic solvents such as toluene and xylene; glycol ethers such as propylene glycol monomethyl ether; acetic acid esters such as methyl acetate, ethyl acetate, and butyl acetate; and diacetone alcohol.

Among these, it is preferable to use a mixture of cyclohexanone, methyl ethyl ketone, methyl isobutyl ketone, butyl acetate, isopropyl acetate, and methyl acetate at an arbitrary ratio.

An amount of the solvent in the curable composition for forming the HC layer can be appropriately adjusted within a range that ensures coating suitability of the composition. The content of the solvent is preferably 50 to 500 parts by mass and more preferably 80 to 200 parts by mass with respect to 100 parts by mass of the total amount of the polymerizable compound and the photopolymerization initiator.

In addition, a proportion of solid contents of the curable composition for forming HC is preferably 10% to 90% by mass, more preferably 50% to 80% by mass, and still more preferably 65% to 75% by mass with respect to the total mass of the curable composition for forming HC.

The curable composition for forming an HC layer may contain one or more known additives in an arbitrary amount in addition to the above components. Examples of the additive include a surface modifier, a polymerization inhibitor, and polyrotaxane.

The details thereof can refer to, for example, paragraphs 0032 to 0034 of JP2012-229412A. However, the additive is not limited thereto, and various additives which can be generally added to the curable composition for forming the HC layer can be used.

The curable composition for forming the HC layer can be prepared by simultaneously or sequentially mixing the various components described above in any order. The preparation method is not particularly limited, and the composition can be prepared using a known stirrer or the like.

A thickness of the HC layer 14 is preferably 1 µm or more, more preferably 1 to 100 µm, still more preferably 1 to 20 µm, particularly preferably 3 to 20 µm, and most preferably 5 to 20 µm.

The thickness of the HC layer 14 is measured by cutting the HC layer 14 with a microtome to take out a cross section, staining the cross section with a 3% by mass aqueous solution of osmium tetroxide for one night, and then taking out the surface again to observe the cross section with a scanning electron microscope (SEM).

The HC layer can be formed by applying the curable composition for forming the HC layer and irradiating the curable composition with active energy rays.

The coating can be performed by a known coating method such as a dip coating method, an air knife coating method, a curtain coating method, a roller coating method, a die coating method, a wire bar coating method, and a gravure coating method.

The HC layer can also be formed as an HC layer of a laminated structure having two or more layers (for example, approximately 2 to 5 layers) by applying two or more compositions with different formulations simultaneously or sequentially.

The HC layer can be formed by irradiating the applied curable composition for forming an HC layer with active energy rays.

For example, in a case where the curable composition for forming the HC layer contains the radically polymerizable compound, the cationically polymerizable compound, the radical photopolymerization initiator, and the cationic photopolymerization initiator, each of a polymerization reaction of the radically polymerizable compound and a polymerization reaction of the cationically polymerizable compound can be initiated and proceed by the action of the radical photopolymerization initiator and the cationic photopolymerization initiator, respectively. A wavelength of the light to be radiated may be determined depending on the type of the polymerizable compound and polymerization initiator to be used. Examples of a light source for the light irradiation include a low pressure mercury lamp, a high pressure mercury lamp, an ultra-high pressure mercury lamp, a carbon arc lamp, a metal halide lamp, a xenon lamp, a chemical lamp, an electrodeless discharge lamp, and a light emitting diode (LED), all of which emit light in a wavelength range of 150 to 450 nm.

In addition, the amount of light irradiation is preferably 30 to 3,000 mJ/cm² and more preferably 100 to 1,500 mJ/cm². A drying treatment may be performed as necessary before or after the light irradiation, or before and after the light irradiation. The drying treatment can be performed by blowing hot air, disposing the film in a heating furnace, transporting the film in a heating furnace, and the like.

In a case where the curable composition for forming the HC layer contains a solvent, the heating temperature may be set to a temperature at which the solvent can be dried and removed, and is not particularly limited. The heating temperature means the temperature of hot air or the internal atmospheric temperature of the heating furnace.

In a case where the base material 11 has an HC layer, it is desirable that the HC layer is provided between the protective film 12 and the transparent resin layer 16.

### <Transparent Resin Layer>

As described above, the base material 11 included in the laminate according to the embodiment of the present invention may include the transparent resin layer 16.

The material of the transparent resin layer 16 is not particularly limited as long as the oxygen permeability coefficient of the laminate 10 satisfies the specified value. The transparent resin layer 16 is preferably transparent in the visible light region.

The material of the transparent resin layer 16 is not particularly limited. Examples of the transparent resin layer 16 include plastic films such as polyester such as polyethylene terephthalate (PET); polycarbonate; acrylic resins such as polymethyl methacrylate (PMMA) and a styrene-methacrylic acid copolymer; epoxy resins; polyurethane; polyamide; polyimide; polyolefin; cellulose derivatives; and silicone.

As the transparent resin layer 16, a cellulose acylate film or a polyethylene terephthalate film is preferable.

The thickness of the transparent resin layer 16 is not particularly limited as long as the laminate satisfies the above-described oxygen permeability coefficient, but is preferably 25 µm or more and more preferably 40 µm or more. The upper limit value thereof is not particularly limited, but is usually 500 µm or less.

The tensile modulus of the transparent resin layer 16 is not particularly limited, but is preferably 1.0 GPa or more, more preferably 2.5 GPa or more, still more preferably 3.0 GPa or more, particularly preferably 3.5 GPa or more, and most preferably 4.0 GPa or more. The upper limit value thereof is not particularly limited, but is usually 12.0 GPa or less.

The tensile modulus of the transparent resin layer 16 can be changed depending on, for example, the type of resin constituting the transparent resin layer 16, and in general, the tensile modulus tends to be increased by increasing the molecular weight and/or the degree of crystallinity of the resin. In addition, the tensile modulus of the transparent resin layer 16 in the stretching direction can be increased by stretching. Even in a case where the transparent resin layer 16 consists of a plurality of layers, the tensile modulus means the tensile modulus of the transparent resin layer 16.

The transparent resin layer 16 may be formed by any method, and examples thereof include a melting film-forming method and a solution film-forming method.

### (Melting Film-Forming Method)

In a case where the transparent resin layer 16 is formed by a melt film-forming method, the melt film-forming method preferably includes a melting step of melting a resin with an extruder, a step of extruding the melted resin into a sheet shape from a die, and a step of molding the melted resin into a film shape. Depending on materials of resins, a step of filtering the melted resin may be provided after the melting step, or the melted resin may be cooled in a case where it is extruded into a sheet shape.

Hereinafter, the melting film-forming method will be specifically described, but the present invention is not limited thereto.

The manufacturing method of the transparent resin layer described above preferably includes a melting step of melting a resin with an extruder; a filtration step of filtering the melted resin through a filtering device equipped with a filter; a film-forming step of extruding the filtered resin into a sheet shape from a die, cooling and solidifying the extruded resin by closely attaching the resin to a cooling drum, thereby forming an unstretched transparent resin layer; and a stretching step of uniaxially or biaxially stretching the unstretched transparent resin layer.

With such a configuration, the transparent resin layer can be manufactured. In a case where a pore size of the filter used in the filtration step of filtering the melted resin is 1 µm or less, foreign substances can be sufficiently removed. As a result, the surface roughness of the obtained transparent resin layer in the film width direction can be controlled.

Specifically, the method of forming the transparent resin layer can include the following steps.

The manufacturing method of the transparent resin layer described above includes a melting step of melting the resin with an extruder.

It is preferable that the resin or a mixture of the resin and an additive is dried to a moisture content of 200 ppm or less, and then introduced into a uniaxial (monoaxial) or biaxial extruder to be melted. In this case, in order to suppress decomposition of the resin, it is also preferable to melt the resin in nitrogen or in a vacuum. The step can be performed under detailed conditions with the aid of paragraphs 0051 and 0052 of JP4962661B (paragraphs 0085 and 0086 of US2013/0100378A) in accordance with these publications, and the contents of these publications are incorporated in the present specification.

The extruder is preferably a uniaxial kneading extruder.

Furthermore, it is also preferable to use a gear pump in order to improve accuracy of sending the melted resin (melting).

The manufacturing method of the transparent resin layer described above includes a filtration step of filtering the melted resin through a filtering device equipped with a filter, in which a pore diameter of the filter used in the filtration step is preferably 1 µm or less.

In the filtration step, only one set of the filtering device having the filter having such a pore diameter range may be installed, or two or more sets thereof may be installed.

The manufacturing method of the transparent resin layer described above includes a film forming step of extruding the filtered resin in a sheet shape from a die and cooling and solidifying the resin by closely attaching the resin to a cooling drum to form an unstretched transparent resin layer.

In a case where the melted (and kneaded) and filtered resin (melting containing the resin) is extruded into a sheet shape from the die, it may be extruded in a single layer, or may be extruded in a multilayer. In the case of extrusion in multiple layers, for example, a layer containing an ultraviolet absorber and a layer not containing an ultraviolet absorber may be laminated, and more preferably, a three-layer structure in which a layer containing an ultraviolet absorber is an inner layer is preferable from the viewpoint that deterioration of a polarizer due to ultraviolet rays can be suppressed, and bleeding out of an ultraviolet absorber can be inhibited.

In a case where the transparent resin layer is manufactured by extruding a multilayer, the thickness of the preferred inner layer of the obtained transparent resin layer with respect to the thickness of all layers is preferably 50% to 99%, more preferably 60% to 99%, and still more preferably 70% to 99%. Such lamination can be performed using a feed block die, a multi-manifold die, or the like.

It is preferable that the resin (melting containing the resin) extruded into a sheet shape from the die is extruded to a cooling drum (casting drum), and cooled and solidified, thereby an unstretched transparent resin layer (original sheet), in accordance with paragraph 0059 of JP2009-269301A.

In the manufacturing method of the transparent resin layer described above, the temperature of the resin extruded from the die is preferably 280°C to 320°C and more preferably 285°C to 310°C. In a case where the temperature of the resin extruded from the die in the melting step is 280°C or higher, it possible to reduce a residual melt of a raw material resin and suppress occurrence of foreign substances, which is preferable. In a case where a temperature of the resin extruded from the die in the melting step is 320°C or lower, this is preferable from the viewpoint that then, decomposition of resin can be reduced, and thereby generation of foreign substances can be inhibited.

In measuring a temperature of the resin extruded from the die, a surface of the resin can be measured in a contactless manner using a radiation-type thermometer (used with an emissivity of 0.95, model number: RT61-2, manufactured by Hayashi Denko Co., Ltd.).

In the manufacturing method of the transparent resin layer described above, it is preferable that an electrostatic application electrode is used in a case of closely attaching the resin to the cooling drum in the film forming step. Thereby, the resin can be strongly and closely attached onto the cooling drum so that a film surface is not roughened.

In the manufacturing method of the transparent resin layer described above, a temperature of the resin in a case where the resin is closely attached to the cooling drum (in a case where the melted resin extruded from the die first comes into contact with the cooling drum) is preferably 280°C or higher. Accordingly, electrical conductivity of the resin is increased, the resin can be strongly and closely attached onto the cooling drum by electrostatic application, and thereby roughening of the film surface can be inhibited.

In measuring the temperature of the resin in a case of closely attaching the resin to the cooling drum, a surface of the resin can be measured in a contactless manner using a radiation-type thermometer (manufactured by Hayashi Denko Co., Ltd., model number: RT61-2, used with an emissivity of 0.95).

The manufacturing method of the transparent resin layer described above includes a stretching step of uniaxially or biaxially stretching an unstretched transparent resin layer.

In the machine-direction stretching step (a step of stretching in the same direction as the transport direction of the film), the transparent resin layer is preheated, and then the transparent resin layer is stretched in the transport direction by a roller group having a circumferential speed difference (that is, having different transport speeds) in a state of being heated.

The preheating temperature in the machine-direction stretching step is preferably Tg - 40°C or higher and Tg + 60°C or lower, more preferably Tg - 20°C or higher and Tg + 40°C or lower, and still more preferably Tg or higher and Tg + 30°C or lower with respect to the glass transition temperature (Tg) of the transparent resin layer. In addition, the stretching temperature in the machine-direction stretching step is preferably Tg or higher and (Tg + 60°C) or lower, more preferably (Tg + 2°C) or higher and (Tg + 40°C) or lower, and still more preferably (Tg + 5°C) or higher and (Tg + 30°C) or lower. A stretching ratio in the machine direction is preferably 1.0 to 2.5 times and more preferably 1.1 to 2 times.

In addition to or in place of the machine-direction stretching step, the transparent resin layer is subjected to cross-direction stretching in a width direction by a cross-direction stretching step (a step of stretching the transparent substrate in a direction perpendicular to the transport direction of the film). In the cross-direction stretching step, for example, a tenter can be suitably used, and both end parts of the transparent resin layer in the width direction are gripped by clips and stretched in the cross direction by the tenter. By this cross-direction stretching, the tensile modulus of the transparent resin layer can be increased.

The cross-direction stretching is preferably performed using a tenter, and a stretching temperature is preferably Tg or higher and (Tg + 60°C) or lower, more preferably (Tg + 2°C) or higher and (Tg + 40°C) or lower, and still more preferably (Tg + 4°C) or higher and (Tg + 30°C) or lower with respect to a glass transition temperature (Tg) of the transparent resin layer. A stretching ratio is preferably 1.0 to 5.0 times and more preferably 1.1 to 4.0 times. It is also preferable to relax the transparent resin layer in either or both of the machine direction and the cross direction after the cross-direction stretching.

In addition, a variation in thickness depending on the location in a width direction and a longitudinal direction is preferably 10% or less, more preferably 8% or less, still more preferably 6% or less, particularly preferably 4% or less, and most preferably 2% or less.

Furthermore, the variation in thickness can be obtained as follows.

A stretched transparent resin layer is sampled for 10 m (meters), both end portions in a width direction of the film are removed by 20%, and 50 points are sampled at equal intervals from the central part of the film in each of a width direction and a longitudinal direction to measure a thickness.

The average value Th_{TD-av}, the maximum value Th_{TD-max}, and the minimum value Th_{TD-min} in the width direction are obtained, and (Th_{TD-max} - Th_{TD-min}) ÷ Th_{TD-av} × 100 [%] is the variation in thickness in the width direction.

In addition, the average value Th_{MD-av}, the maximum value Th_{MD-max}, and the minimum value Th_{MD-min} in the longitudinal direction are obtained, and (Th_{MD-max} - Th_{MD-min}) ÷ Th_{MD-av} × 100 [%] is the variation in thickness in the longitudinal direction.

The thickness accuracy of the transparent resin layer can be improved by the above-described stretching step.

The transparent resin layer after stretching can be wound into a roll shape in the winding step. In this case, a winding tension of the transparent resin layer is preferably 0.02 kg/mm² or less.

Regarding other detailed conditions, contents described in paragraphs 0134 to 0148 of JP2015-224267A for the melt film formation and contents described in JP2007-137028A for the stretching step can be incorporated in the present specification in accordance with the present invention.

### (Solution Film Forming Method)

In a case where the transparent resin layer is formed by a solution film-forming method, the solution film-forming method preferably includes a step of casting a dope solution on a casting band to form a casting film, a step of drying the casting film, and a step of stretching the casting film. Specifically, it is preferable to form a film by a method described in JP4889335B.

In the present invention, the following method is preferably adopted.

Examples thereof include a method described in JP1999-123732A (JP-H11-123732A), in which a drying speed for the casting film is set to 300 % by mass/min (= 5 % by mass/s) or less based on an amount of a solvent contained on a dry base to perform gentle drying. In addition, examples thereof further include a method described in JP2003-276037A, in which in a co-casting method of a casting film having a multilayer structure having skin layers (outer layers) on both surfaces of a core layer which is an interlayer, a viscosity of a dope solution forming the core layer is increased while ensuring strength of the casting film by decreasing a viscosity of a dope forming the outer layer. Preferred examples thereof include a method of rapidly drying a casting film to form a film on the surface of the casting film, and smoothing a surface state by a leveling effect of the formed film, and a method of stretching a casting film.

It is desirable that the transparent resin layer 16 is contracted by heat. In a case where the laminate is caused to follow the curved glass, it is presumed that a portion which is extra to the laminate having a plane is generated with respect to the curved glass, and thus it is difficult to follow the curved surface. Therefore, it is preferable that the transparent resin layer 16 is thermally shrunk, so that the extra portion of the laminate is shrunk and can follow the curved surface.

In general, the transparent resin layer includes a process of being stretched in the manufacturing, and stress due to the stretching is present as residual stress. Therefore, the residual stress can be utilized to induce thermal contraction during the curved surface following through heating. It is presumed that the laminate can follow the curved glass by the thermal shrinkage. In addition, a portion where the following is insufficient is likely to be generated in a portion where the curvature of the glass is large in the vicinity of an outer peripheral portion of the curved glass, and is unlikely to be generated in a portion where the curvature of the glass is small. On the other hand, in the laminate using the transparent resin layer which is thermally shrunk, there is an action of effectively suppressing the occurrence of the insufficient following in the portion where the curvature of the glass is large. It is considered that an action mechanism is as follows. In the portion where the curvature of the glass is large, the laminate has a degree of freedom to expand in the thickness direction, and thus the laminate is contracted in the plane direction. On the other hand, in the portion where the curvature of the glass is small, the laminate has a small degree of freedom to expand in the thickness direction, and thus the laminate is hardly contracted in the plane direction.

A temperature at which the transparent resin layer 16 is thermally shrunk varies depending on the forming material of the transparent resin layer 16, but the transparent resin layer 16 is preferably shrunk in a range of 80°C to 200°C and more preferably shrunk in a range of 90°C to 140°C which is a heating treatment temperature in a general curved surface following process.

The heating for shrinking the transparent resin layer 16 may be performed on the entire curved glass, or may be performed locally in a portion where the curvature is high and the insufficient following is likely to occur.

The amount of shrinkage of the transparent resin layer 16 required for suppressing the insufficient following varies depending on the curvature, the dimensions, and the like of the glass. The thermal shrinkage rate of the transparent resin layer 16 is not particularly limited as long as the thermal shrinkage rate is satisfied in a case of being formed into a laminate, but the average of the thermal shrinkage rates in a direction in which the thermal shrinkage rate is maximum and a direction orthogonal to the direction at 140°C is preferably 0.3% to 5.0%, more preferably 0.3% to 3.0%, and still more preferably 0.3% to 2.0%. The thermal shrinkage rate can be appropriately adjusted by the stretching conditions in a case of manufacturing the transparent resin layer.

### <Retardation Layer>

The base material 11 included in the laminate according to the embodiment of the present invention may include a retardation layer 18.

In the retardation layer 18, a phase difference (optical path difference) is provided to two orthogonal polarized light components to change the state of the incident polarized light.

In a case where the retardation layer 18 is disposed on a glass plate side on the in-vehicle side and optically compensates, a front phase difference of the retardation layer may be a phase difference which can optically compensate.

In this case, the retardation layer 18 preferably has a front retardation of 50 to 160 nm at a wavelength of 550 nm.

In addition, in a case where a direction corresponding to an upper side of a surface of the glass plate in a vertical direction is defined as 0° in a case where the windshield glass including the laminate is mounted on the vehicle, it is preferable that the angle of the slow axis is 10° to 50° or -50° to -10°.

In addition, in a case where the retardation layer 18 converts linearly polarized light into circularly polarized light, the retardation layer 18 is preferably configured to provide λ/4 as the front phase difference, and may be configured to provide 3λ/4 as the front phase difference. In addition, the angle of the slow axis may be arranged to change the incident linearly polarized light into circularly polarized light.

In this case, for example, the front phase difference of the retardation layer 18 at a wavelength of 550 nm is preferably in a range of 100 to 450 nm, and more preferably in a range of 120 to 200 nm or 300 to 400 nm. In addition, it is preferable that the direction of the slow axis of the retardation layer 18 is determined according to an incidence direction of projection light for displaying a projection image and a helical sense of the cholesteric liquid crystal layer constituting the reflective layer in a case where the laminate is used in the head-up display system.

The retardation layer 18 is not particularly limited and can be appropriately selected according to the purpose. Examples of the retardation layer 18 include a stretched polycarbonate film, a stretched norbornene-based polymer film, a transparent film in which inorganic particles having birefringence such as strontium carbonate are included and aligned, a thin film in which oblique deposition of an inorganic dielectric is performed on a support, a film in which the polymerizable liquid crystal compound is uniaxially aligned and the alignment is fixed, a film in which the liquid crystal compound is uniaxially aligned and the alignment is fixed, and the like.

Among these, the retardation layer 18 is suitably a film obtained by uniaxially aligning and fixing a polymerizable liquid crystal compound.

As an example, the retardation layer 18 can be formed by a method in which a liquid crystal composition containing a polymerizable liquid crystal compound is applied onto a transparent base material, a temporary support, or a surface of an alignment layer, the polymerizable liquid crystal compound in the liquid crystal composition is formed in a nematic alignment in a liquid crystal state, and the polymerizable liquid crystal compound is immobilized by curing.

The retardation layer 18 may be a layer formed by applying a composition including a high-molecular liquid crystal compound on the transparent base material, the temporary support, the surface of the alignment layer or the like, forming the nematic alignment in a liquid crystal state, cooling the composition, and then obtained by immobilizing the alignment.

A thickness of the retardation layer 18 is not particularly limited, and is preferably 0.2 to 300 µm, more preferably 0.5 to 150 µm, and still more preferably 1.0 to 80 µm. A thickness of the retardation layer 18 formed from the liquid crystal composition is not particularly limited, and is preferably 0.2 to 10 µm, more preferably 0.5 to 5.0 µm, and still more preferably 0.7 to 2.0 µm.

### <Reflective Layer>

The base material 11 included in the laminate according to the embodiment of the present invention may include a reflective layer 20.

The reflective layer 20 reflects a part or all of visible light, and is not particularly limited. Examples thereof include a layer containing a metal, a layer in which dielectrics are laminated, and a layer containing a liquid crystal.

It is preferable that the reflective layer 20 includes a cholesteric liquid crystal layer having a selective reflection center wavelength in a red wavelength range, a cholesteric liquid crystal layer having a selective reflection center wavelength in a green wavelength range, and a cholesteric liquid crystal layer having a selective reflection center wavelength in a blue wavelength range. The three cholesteric liquid crystal layers have different selective reflection center wavelengths from one another. Each cholesteric liquid crystal layer may be in direct contact with any other cholesteric liquid crystal layer.

As is well known, the cholesteric liquid crystal layer is a layer composed of a liquid crystal compound in an alignment state of a helical structure in which a cholesteric liquid crystalline phase is immobilized, reflects light having a selective reflection center wavelength corresponding to a pitch of the helical structure, and transmits light in another wavelength range. In addition, the cholesteric liquid crystal layer exhibits selectively reflecting properties in response to either levorotatory circularly polarized light or dextrorotatory circularly polarized light at a specific wavelength.

Here, from the viewpoint of visibility, it is preferable that the reflective layer 20 satisfies the following requirements (i) to (iii).
(i) In a wavelength range of 400 nm or more and less than 500 nm, the maximum value of the natural light reflectivity is more than 7% (preferably more than 20%), a difference between the greatest maximum value and the smallest minimum value of the natural light reflectivity is 3% or more, and the total value of wavelength bandwidths of the region higher than the average value of the maximum value and the minimum value of the natural light reflectivity is 20 to 80 nm.
(ii) In a wavelength range of 500 nm or more and less than 600 nm, the maximum value of the natural light reflectivity is more than 7% (preferably more than 20%), a difference between the greatest maximum value and the smallest minimum value of the natural light reflectivity is 3% or more, and the total value of wavelength bandwidths of the region higher than the average value of the maximum value and the minimum value of the natural light reflectivity is 20 to 80 nm.
(iii) In a wavelength range of 600 to 800 nm, the maximum value of the natural light reflectivity is more than 7% (preferably 20% or more), and the total value of wavelength bandwidths of the region higher than the average value of the maximum value and the minimum value of the natural light reflectivity is 120 nm or more.

In the reflective layer including the cholesteric liquid crystal layer, the reflected wavelength and the reflectivity can be adjusted by the selective reflection center wavelength and the thickness (helical pitch number) of the cholesteric liquid crystal layer. Mainly, the requirement (i) can be satisfied by the cholesteric liquid crystal layer reflecting light in the blue wavelength range, the requirement (ii) can be satisfied by the cholesteric liquid crystal layer reflecting light in the green wavelength range, and the requirement (iii) can be satisfied by the cholesteric liquid crystal layer reflecting light in the red wavelength range.

From the viewpoint that the transmittance can be increased while improving the reflection tint, the maximum value of the natural light reflectivity in the range of 400 nm or more and less than 500 nm is preferably more than 7%, and more preferably 20% or more. The upper limit thereof is not particularly limited, and may be, for example, 35% or less.

Similarly, from the viewpoint that the transmittance can be increased while improving the reflection tint, the maximum value of the natural light reflectivity in the range of 500 nm or more and less than 600 nm is preferably more than 7%, and more preferably 20% or more. The upper limit thereof is not particularly limited, and may be, for example, 35% or less.

From the viewpoint that the brightness of the display image can be increased while improving the reflection tint, the maximum value of the natural light reflectivity in the range of 600 to 800 nm is preferably more than 7%, and more preferably 20% or more. The upper limit thereof is not particularly limited, and may be, for example, 35% or less.

From the viewpoint that the transmittance can be increased while improving the reflection tint, the difference between the greatest maximum value and the smallest minimum value of the natural light reflectivity in the range of 400 nm or more and less than 500 nm is preferably 4% to 20%, and more preferably 4% to 12%.

Similarly, from the viewpoint that the transmittance can be increased while improving the reflection tint, the difference between the greatest maximum value and the smallest minimum value of the natural light reflectivity in the range of 500 nm or more and less than 600 nm is preferably 4% to 20%, and more preferably 4% to 12%.

From the viewpoint that the transmittance can be increased while improving the reflection tint, the wavelength bandwidth of the region having a higher reflectivity than the average value of the maximum value and the minimum value of the reflectivity in the range of 400 nm or more and less than 500 nm is preferably 30 to 78 nm, and more preferably 35 to 75 nm.

Similarly, from the viewpoint that the transmittance can be increased while improving the reflection tint, the wavelength bandwidth of the region having a higher reflectivity than the average value of the maximum value and the minimum value of the reflectivity in the range of 500 nm or more and less than 600 nm is preferably 30 to 78 nm, and more preferably 35 to 75 nm.

In the wavelength bandwidth in the range of 400 nm or more and less than 500 nm, and the wavelength bandwidth in the range of 500 nm or more and less than 600 nm, it is advantageous for the transmittance as the width is narrower. However, the reflection tint may be deteriorated in a case where the wavelength bandwidth in the range of 400 nm or more and less than 500 nm and/or the wavelength bandwidth in the range of 500 nm or more and less than 600 nm is too narrow because the wavelength bandwidth in the range of 600 to 800 nm is wide. For this reason, the wavelength bandwidth in a range of 400 nm or more and less than 500 nm and the wavelength bandwidth in a range of 500 nm or more and less than 600 nm are preferably within the above ranges.

In addition, the wavelength bandwidth in a range of 500 nm or more and less than 600 nm has a large influence on the transmittance.

From the viewpoint of improving the front brightness of the display image while improving the reflection tint, the wavelength bandwidth of the region having a higher reflectivity than the average value of the maximum value and the minimum value of the reflectivity in the range of 600 to 800 nm is preferably 120 to 200 nm.

It is preferable that the reflective layer 20 has two or more cholesteric liquid crystal layers with different selective reflection center wavelengths. In addition, it is preferable that each cholesteric liquid crystal layer is in direct contact with any other cholesteric liquid crystal layer.

In a case where the cholesteric liquid crystal layers are spaced from each other, a film thickness between the layers is thick, and it is difficult to obtain the effect of interference of light reflected by each cholesteric liquid crystal layer. On the other hand, by adopting a configuration in which the cholesteric liquid crystal layers are in contact with each other, the wavelength bandwidth can be narrowed because of the effect of interference of light reflected by each cholesteric liquid crystal layer, which is preferable. In particular, in a case where a film thickness of each cholesteric liquid crystal layer is thinner than a wavelength of light (visible light of 380 nm to 780 nm), the effect of interference is more remarkable, which is preferable.

In a case where the reflective layer 20 includes two or more cholesteric liquid crystal layers, the cholesteric liquid crystal layers are not limited to a configuration in which the cholesteric liquid crystal layers are in direct contact with each other, and may be laminated through an adhesive layer or the like.

Here, each of the cholesteric liquid crystal layers may have at least one selective reflection center wavelength, but at least one cholesteric liquid crystal layer may have two or more selective reflection center wavelengths. A cholesteric liquid crystal layer having two or more selective reflection center wavelengths is obtained by adopting a helical structure in which a helical pitch changes in a thickness direction.

The total thickness of the reflective layer 20 is preferably 0.4 to 2.0 µm, more preferably 0.6 to 1.8 µm, and still more preferably 0.8 to 1.4 µm.

### <Interlayer>

The base material 11 included in the laminate according to the embodiment of the present invention may include an interlayer.

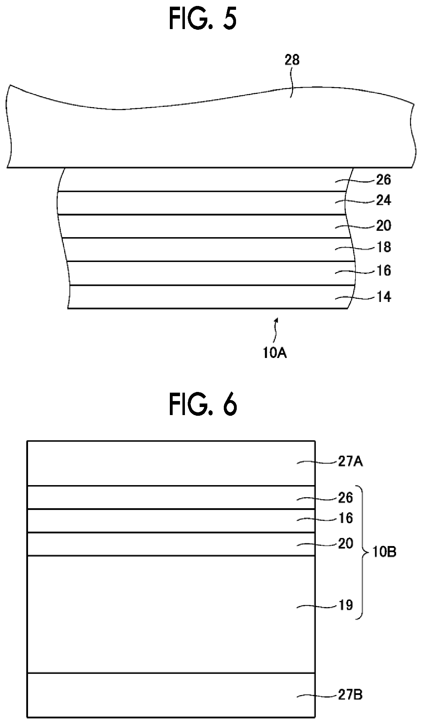

This interlayer is suitably used in an aspect of the bonded body shown in FIG. 6, for example, an aspect in which the laminate according to the embodiment of the present invention is applied to laminated glass.

As such an interlayer, for example, a resin film including a resin selected from the group consisting of polyvinyl butyral (PVB), an ethylene-vinyl acetate copolymer, and a chlorine-containing resin can be used. The resin is preferably a main component of the interlayer. The main component refers to a component that accounts for 50% by mass or more of the interlayer. Among the above resins, polyvinyl butyral or an ethylene-vinyl acetate copolymer is preferable, and polyvinyl butyral is more preferable. The resin is preferably a synthetic resin.

Here, polyvinylbutyral can be obtained by acetalizing polyvinyl alcohol with butyl aldehyde. The degree of acetalization of the polyvinyl butyral is preferably 40% to 85% and more preferably 60% to 75%.

In addition, the polyvinyl butyral can be prepared by acetalizing polyvinyl alcohol with butyraldehyde. The polyvinyl alcohol is normally obtained by saponification of polyvinyl acetate, and polyvinyl alcohol having a degree of saponification of 80 to 99.8 mol% is generally used.

### <Polarization Conversion Layer>

The base material 11 included in the laminate according to the embodiment of the present invention may include the polarization conversion layer 24.

The polarization conversion layer 24 is preferably a layer with a helical alignment structure of the liquid crystal compound, which is immobilized, and the number of pitches x of the helical alignment structure and a film thickness y (unit: µm) of the polarization conversion layer satisfy all of Relational Expressions (a) to (c) as follows. $0.1 \leq x \leq 1.0$ Expression (a) $0.5 \leq y \leq 3.0$ Expression (b) $3000 \leq \left(1560\times y\right) / x \leq 50000$ Expression (c)

One pitch of the helical structure of the liquid crystal compound is one turn of a helix of the liquid crystal compound. That is, the number of pitches of 1 is defined as a state in which the director (in the long axis direction in the case of a rod-shaped liquid crystal) of the helically aligned liquid crystal compound is rotated by 360°.

In a case where the polarization conversion layer 24 has the helical structure of the liquid crystal compound, the polarization conversion layer exhibits optical rotation properties and birefringence with respect to visible light having a wavelength shorter than a reflection peak wavelength in the infrared region. Therefore, the polarized light in the visible region can be controlled. In a case where the number of pitches x of the helical alignment structure of the polarization conversion layer 24 and the film thickness y of the polarization conversion layer are set to be in the above-described ranges, a function of optically compensating for visible light in the polarization conversion layer or a function of converting linearly polarized light (p-polarized light) incident into the laminate into circularly polarized light can be imparted.

The polarization conversion layer 24 exhibits optical rotation properties and birefringence with respect to visible light because the liquid crystal compound has the helical structure satisfying Relational Expressions (a) to (c). Particularly, by setting the pitch P of the helical structure of the polarization conversion layer 24 to have a length corresponding to the pitch P of the cholesteric liquid crystal layer in which the selective reflection center wavelength is within the long wavelength infrared region, it is possible to exhibit high optical turning properties and birefringence with respect to visible light having a short wavelength.

Relational Expression (a) is "0.1 ≤ x ≤ 1.0".

In a case where the number of pitches x of the helical structure is 0.1 or more, sufficient optical rotation and birefringence are obtained, which is preferable.

In addition, in a case where the number of pitches x of the helical structure is 1.0 or less, the optical rotation and birefringence are sufficient, and desired elliptic polarization is easily obtained.

Relational Expression (b) is "0.5 ≤ y ≤ 3.0".

In a case where the thickness y of the polarization conversion layer is 0.5 µm or more, sufficient optical rotation and birefringence are obtained.

In a case where the thickness y of the polarization conversion layer is 3.0 µm or less, the optical rotation and birefringence are sufficient, and desired circular polarization is easily obtained.

Relational Expression (c) is "3000 ≤ (1560 × y)/x ≤ 50000".

In a case where "(1560 × y)/x" is 3,000 or more, desired polarization is easily obtained.

In a case where "(1560 × y)/x" is 50,000 or less, desired polarization is easily obtained.

In the present invention, the number of pitches x of the helical structure of the polarization conversion layer 24 is more preferably 0.1 to 0.8, and the film thickness y is more preferably 0.6 to 2.6 µm. In addition, "(1560 × y)/x" is more preferably 5,000 to 13,000.

That is, it is preferable that the polarization conversion layer 24 has a long pitch P of the helical structure and a small number of pitches x.

Specifically, in the polarization conversion layer 24, it is preferable that the helical pitch P is equal to a pitch P of the cholesteric liquid crystal layer in which the selective reflection center wavelength is within the long wavelength infrared region, and the number of pitches x is small. More specifically, in the polarization conversion layer 24, it is preferable that the helical pitch P is equal to the pitch P of the cholesteric liquid crystal layer in which the selective reflection center wavelength is within 3,000 to 10,000 nm, and the number of pitches x is small.

Since the selective reflection center wavelength corresponding to the pitch P in the polarization conversion layer 24 is much longer than that of visible light, the above described optical turning properties and birefringence with respect to visible light are more suitably exhibited.

The polarization conversion layer 24 can be basically formed in the same manner as a known cholesteric liquid crystal layer. However, during the formation of the polarization conversion layer 24, it is preferable to adjust the liquid crystal compound to be used, the chiral agent to be used, the amount of the chiral agent added, the film thickness, and the like, so that the number of pitches x and the film thickness y [µm] of the helical structure in the polarization conversion layer 24 satisfy all of Relational Expressions (a) to (c).

In the laminate according to the embodiment of the present invention, it is preferable that the base material includes all of the hard coat layer, the reflective layer, the retardation layer, and the polarization conversion layer described above, and it is more preferable that the base material includes all of the protective film, the transparent resin layer, the hard coat layer, the reflective layer, the retardation layer, and the polarization conversion layer described above.

### [Adhesive Layer]

The laminate according to the embodiment of the present invention includes an adhesive layer 26.

The adhesive layer 26 is a layer for physically bonding the laminate and the adherend, and air contained in the defect is dissolved in the adhesive layer, so that air bubbles disappear and the visibility of the defect can be suppressed.

The material of the adhesive layer is not particularly limited as long as the adhesive layer has transparency that can ensure the visibility of the display content in a case of being bonded to the adherend, and can adhere the base material and the adherend to each other. The adhesive layer may be formed of a resin or may be formed of an elastomer (including oil-extended rubber).

In addition, the adhesive layer may be a layer that exhibits adhesiveness by being plasticized by heat during bonding to the adherend (heat seal layer) or may be a layer that has pressure-sensitive adhesiveness and can be bonded at room temperature (pressure-sensitive adhesive layer).

The adhesive layer 26 preferably contains a thermoplastic resin or an elastomer.

As the thermoplastic resin, a resin having good affinity and adhesiveness to the adherend (for example, a glass substrate) is preferable, and examples thereof include a 1,2-polybutadiene resin, an ethylene-vinyl acetate copolymer (abbreviated as "EVA". In addition, the thermoplastic resin may be a polyolefin resin such as polyethylene, a polyvinyl chloride resin, a polystyrene resin, a vinyl ester resin (excluding EVA), a saturated polyester resin, a polyamide resin, a fluororesin (such as polyvinylidene fluoride), a polycarbonate resin, a polyacetal resin, a urethane resin, an epoxy resin, a (meth)acrylate resin (also referred to as a (meth)acrylic resin, and means a (meth)acrylic acid ester resin or the like), an unsaturated polyester resin, a silicone resin, or a modified resin of these resins. Examples of the urethane resin include a urethane-modified polyester resin and a urethane resin.

As the thermoplastic resin, a (meth)acrylate resin, a polyvinyl butyral, or an ethylene-vinyl acetate copolymer is preferable.

Polyvinylbutyral can be obtained by acetalizing polyvinyl alcohol with butyl aldehyde.

An acetalization degree of the polyvinyl butyral is not particularly limited, but is preferably 40% or more and more preferably 60% or more. The upper limit thereof is not particularly limited, but is preferably 85% or less and more preferably 75% or less.

The polyvinyl alcohol used in the synthesis of the polyvinyl butyral is usually obtained by saponifying polyvinyl acetate, and polyvinyl alcohol with a saponification degree of 80 to 99.8 mol% is generally used.

In addition, a degree of polymerization of the above-described polyvinyl alcohol is preferably 200 to 3,000.

Examples of the elastomer include a conjugated diene block (co)polymer, an acrylic-based block (co)polymer, a styrene-based block (co)polymer, a block copolymer of an aromatic vinyl compound and a conjugated diene, a hydrogenated product of a conjugated diene block (co)polymer, a hydrogenated product of a block copolymer of an aromatic vinyl compound and a conjugated diene, an ethylene-α-olefin-based copolymer, a polar group-modified olefin-based copolymer, an elastomer of a polar group-modified olefin-based copolymer and a metal ion and/or a metal compound, a nitrile-based rubber such as acrylonitrile-butadiene rubber, butyl rubber, acrylic rubber, a thermoplastic polyolefin elastomer (TPO), a thermoplastic polyurethane elastomer (TPU), a thermoplastic polyester elastomer (TPEE), a thermoplastic polyamide elastomer (TPAE), a thermoplastic elastomer such as a diene-based elastomer (1,2-polybutadiene and the like), a silicone-based elastomer, and a fluorine-based elastomer.

The thermoplastic resin or the elastomer may be synthesized by a known method, or a commercially available product thereof may be used. Examples of commercially available elastomers include KURARITY LA1114, KURARITY LA2140, KURARITY LA2250, KURARITY LA2330, KURARITY LA4285, HYBRAR 5127, HYBRAR 7311F, SEPTON 2104, and SEPTON 2063 (manufactured by Kuraray Co., Ltd., trade names). As the elastomer, an acrylic block (co)polymer or a styrene-based block (co)polymer is preferable from the viewpoint of oxygen solubility.

From the viewpoint of balance between solubility in a solvent and storage elastic modulus, a weight-average molecular weight of the thermoplastic resin or the elastomer is preferably 10,000 to 1,000,000 and more preferably 50,000 to 500,000.

It is preferable that the adhesive layer 26 is formed of a composition (composition for forming an adhesive layer) containing a polymerizable compound for chemically bonding to the reflective layer or the polarization conversion layer. The polymerizable compound is preferably a compound capable of being chemically bonded to the polymerizable liquid crystal compound used for forming the base material (particularly, the reflective layer or the polarization conversion layer). For example, in a case where the polymerizable liquid crystal compound has an ethylenically unsaturated polymerizable group, it is preferable that the polymerizable compound also has an ethylenically unsaturated polymerizable group.

Examples of the ethylenically unsaturated polymerizable group-containing compound include the following compounds. However, the present invention is not limited to the following exemplary compounds.

Examples thereof include bifunctional (meth)acrylate compounds such as polyethylene glycol 200 di(meth)acrylate, polyethylene glycol 300 di(meth)acrylate, polyethylene glycol 400 di(meth)acrylate, polyethylene glycol 600 di(meth)acrylate, triethylene glycol di(meth)acrylate, epichlorohydrin-modified ethylene glycol di(meth)acrylate (as a commercially available product, for example, Denacol DA-811 manufactured by Nagase & Co., Ltd.), polypropylene glycol 200 di(meth)acrylate, polypropylene glycol 400 di(meth)acrylate, polypropylene glycol 700 di(meth)acrylate, ethylene oxide (EO)/propylene oxide (PO) block polyether di(meth)acrylate (as a commercially available product, for example, BLEMMER PET series manufactured by NOF CORPORATION), dipropylene glycol di(meth)acrylate, bisphenol A EO-added di(meth)acrylate (as a commercially available product, for example, M-210 manufactured by Toagosei Co., Ltd., NK ESTER A-BPE-20 manufactured by Shin-Nakamura Chemical Co., Ltd., and the like), hydrogenated bisphenol A EO-added di(meth)acrylate (NK ESTER A-HPE-4 manufactured by Shin-Nakamura Chemical Co., Ltd., and the like), bisphenol A PO-added di(meth)acrylate (as a commercially available product, for example, light acrylate BP-4PA manufactured by KYOEISHA CHEMICAL Co., Ltd.), bisphenol A epichlorohydrin-added di(meth)acrylate (as a commercially available product, for example, Evecryl 150 manufactured by Daicel UCB), bisphenol A EO/PO-added di(meth)acrylate (as a commercially available product, for example, BP-023-PE manufactured by Toho Chemical Industry Co., Ltd.), bisphenol F EO-added di(meth)acrylate (as a commercially available product, for example, Aronix M-208 manufactured by Toagosei Co., Ltd.), 1,6-hexanediol di(meth)acrylate and epichlorohydrin-modified products thereof, neopentyl glycol di(meth)acrylate, hydroxypivalic acid neopentyl glycol di(meth)acrylate, and caprolactone-modified products thereof, 1,4-butanediol di(meth)acrylate, 1,9-nonanediol di(meth)acrylate, trimethylolpropane di(meth)acrylate, tricyclodecane dimethanol di(meth)acrylate, pentaerythritol di(meth)acrylate monostearate, trimethylolpropane acrylic acid/benzoic acid ester, and isocyanuric acid EO-modified di(meth)acrylate (as a commercially available product, for example, Aronix M-215 manufactured by Toagosei Co., Ltd.).

In addition, examples thereof also include trifunctional (meth)acrylate compounds such as trimethylolpropane tri(meth)acrylate (as a commercially available product, for example, TPMTA manufactured by Nippon Kayaku Co., Ltd.) and EO, PO or epichlorohydrin-modified products thereof, pentaerythritol tri(meth)acrylate, glycerol tri(meth)acrylate, and EO, PO or epichlorohydrin-modified products thereof, isocyanuric acid EO-modified tri(meth)acrylate (as a commercially available product, for example, Aronix M-315 manufactured by Toagosei Co., Ltd., and the like), tris(meth)acryloyloxyethyl phosphate, hydrogen phthalate-(2,2,2-tri-(meth)acryloyloxymethyl)ethyl, glycerol tri(meth)acrylate, and EO, PO or epichlorohydrin-modified products thereof; tetrafunctional (meth)acrylate compounds such as pentaerythritol tetra(meth)acrylate (as a commercially available product, for example, TPMTA manufactured by Shin-Nakamura Chemical Co., Ltd.) and EO, PO or epichlorohydrin-modified products thereof, and ditrimethylolpropane tetra(meth)acrylate; pentafunctional (meth)acrylate compounds such as dipentaerythritol penta(meth)acrylate and EO, PO, epichlorohydrin, fatty acid, or alkyl-modified products thereof; and hexafunctional (meth)acrylates such as dipentaerythritol hexa(meth)acrylate and EO, PO, epichlorohydrin, fatty acid, or alkyl-modified products thereof, and sorbitol hexa(meth)acrylate and EO, PO, epichlorohydrin, fatty acid, or alkyl-modified products thereof.

Two or more kinds of the ethylenically unsaturated polymerizable group-containing compounds may be used in combination. In this case, a mixture "DPHA" (manufactured by Nippon Kayaku Co., Ltd.) of dipentaerythritol pentaacrylate and dipentaerythritol hexaacrylate can be preferably used.

In addition, as the ethylenically unsaturated polymerizable group-containing compound, a polyester (meth)acrylate having a weight-average molecular weight of 200 or more and less than 1,000, or an epoxy (meth)acrylate is also preferable. Examples of a commercially available product thereof include, as polyester (meth)acrylate, BEAMSET 700 (hexafunctional), BEAMSET 710 (tetrafunctional), BEAMSET 720 (trifunctional), and the like of BEAMSET 700 series (trade name) manufactured by ARAKAWA CHEMICAL INDUSTRIES, LTD. In addition, examples of the epoxy (meth)acrylate include trade name SP series manufactured by Showa Highpolymer Co., Ltd., such as SP-1506, 500, SP-1507, and 480 ; VR series manufactured by Showa Highpolymer Co., Ltd., such as VR-77; and trade name EA-1010/ECA, EA-11020, EA-1025, EA-6310/ECA and the like manufactured by Shin-Nakamura Chemical Co., Ltd.

From the viewpoint of adhesiveness with the glass substrate, an I/O ratio (ratio of an inorganicity value (I value) and an organicity value (O value)) of the polymerizable compound (particularly, the ethylenically unsaturated polymerizable group-containing compound) is preferably 0.40 or more, more preferably 0.60 or more, and still more preferably 1.2 or more. The upper limit of the I/O ratio is not particularly limited, but from the viewpoint of compatibility with the thermoplastic resin, it is preferably less than 3.0.

The I/O ratio is calculated by a calculation method with an organic conceptual diagram. The organic conceptual diagram is proposed by Fujita et al. and is an effective method for predicting various physicochemical properties from the chemical structure of an organic compound (see Yoshio Koda, Organic Concept Map - Basic and Application -, San-kyo Publishing Co., Ltd. (1984)). Since the polarity of the organic compound is influenced by the number of carbon atoms and the substituent, the inorganicity value and the organicity value of the organic compound are determined based on setting an organicity value of a methylene group to 20 and an inorganicity value of a hydroxyl group to 100, and the inorganicity value and the organicity value of the organic compound are calculated. An organic compound with a high inorganicity value has high polarity, while an organic compound with a high organicity value has low polarity.

Specific calculation methods of the I value, O value, and I/O ratio described above are disclosed by Honma et al., who are co-authors of "New Edition of Organic Concept Diagram: Basics and Applications," as an organic concept diagram calculation sheet for Excel (http://www.ecosci.jp/sheet/orgs_help.html); and the I value, O value, and I/O ratio described above can be calculated using the disclosed calculation sheet.

In a case where the composition used for forming the adhesive layer 26 contains a polymerizable compound, a content of the polymerizable compound is preferably 5% to 80% by mass, more preferably 10% to 60% by mass, and still more preferably 15% to 50% by mass with respect to the solid content in the composition.

The solid content in the composition means components other than a solvent in the composition. Even in a case where a component is liquid, it is calculated as the solid content.

It is preferable that the composition used for forming the adhesive layer 26 (composition for forming an adhesive layer) contains a polymerization initiator from the viewpoint of adhesion to the glass.

Examples of the polymerization initiator include a photopolymerization initiator.

The photopolymerization initiator may be any photopolymerization initiator as long as it can generate a radical as an active species by light irradiation; and known photopolymerization initiators can be used without any limitation. Specific examples thereof include acetophenones such as diethoxyacetophenone, 2-hydroxy-2-methyl-1-phenylpropan-1-one, benzyldimethylketal, 4-(2-hydroxyethoxy)phenyl-(2-hydroxy-2-propyl)ketone, 1-hydroxycyclohexylphenyl ketone, 2-methyl-2-morpholino(4-thiomethylphenyl)propan-1-one, 2-benzyl-2-dimethylamino-1-(4-morpholinophenyl)butanone, 2-hydroxy-2-methyl-1-[4-(1-methylvinyl)phenyl]propanone oligomer, and 2-hydroxy-1-{4-[4-(2-hydroxy-2-methyl-propionyl)-benzyl]phenyl}-2-methyl-propan-1-one; oxime esters such as 1,2-octanedione, 1-[4-(phenylthio)-,2-(O-benzoyloxime)], and ethanone,1-[9-ethyl-6-(2-methylbenzoyl)-9H-carbazol-3-yl]-,1-(0-acetyloxime); benzoins such as benzoin, benzoin methyl ether, benzoin ethyl ether, benzoin isopropyl ether, and benzoin isobutyl ether; benzophenones such as benzophenone, ortho-benzoyl methyl benzoate, 4-phenylbenzophenone, 4-benzoyl-4'-methyl-diphenyl sulfide, 3,3',4,4'-tetra(t-butylperoxycarbonyl)benzophenone, 2,4,6-trimethylbenzophenone, 4-benzoyl-N,N-dimethyl-N-[2-(1-oxo-2-propenyloxy)ethyl]benzenemethanaminium bromide, and (4-benzoylbenzyl)trimethylammonium chloride; thioxanthones such as 2-isopropylthioxanthone, 4-isopropylthioxanthone, 2,4-diethylthioxanthone, 2,4-dichlorothioxanthone, 1-chloro-4-propoxythioxanthone, and 2-(3-dimethylamino-2-hydroxy)-3,4-dimethyl-9H-thioxanthone-9-one mesochloride; and acylphosphine oxides such as 2,4,6-trimethylbenzoyl-diphenylphosphine oxide, bis(2,6-dimethoxybenzoyl)-2,4,4-trimethyl-pentylphosphine oxide, and bis(2,4,6-trimethylbenzoyl)-phenylphosphine oxide. In addition, as an auxiliary agent of the polymerization initiator, triethanolamine, triisopropanolamine, 4,4'-dimethylaminobenzophenone (Michler's ketone), 4,4'-diethylaminobenzophenone, 2-dimethylaminoethylbenzoic acid, ethyl 4-dimethylaminobenzoate, (n-butoxy)ethyl 4-dimethylaminobenzoate, isoamyl 4-dimethylaminobenzoate, 2-ethylhexyl 4-dimethylaminobenzoate, 2,4-diethylthioxanthone, 2,4-diisopropylthioxanthone, and the like may be used in combination.

The above-described polymerization initiator and auxiliary agent can be synthesized by known methods, and are available as commercially available products. Examples of commercially available radical photopolymerization initiators include IRGACURE (127, 651, 184, 819, 907, 1870 (CGI-403/Irg 184 = 7/3 mixing initiator), 500, 369, 1173, 2959, 4265, 4263, and OXE 01), and the like manufactured by BASF SE; KAYACURE (DETX-S, BP-100, BDMK, CTX, BMS, 2-EAQ, ABQ, CPTX, EPD, ITX, QTX, BTC, MCA, and the like) manufactured by Nippon Kayaku Co., Ltd.; and Esacure (KIP100F, KB1, EB3, BP, X33, KT046, KT37, KIP150, and TZT) manufactured by Sartomer Arkema Inc.

A content of the polymerization initiator contained in the composition used for forming the adhesive layer 26 may be appropriately adjusted within a range in which the polymerization reaction of the polymerizable compound proceeds satisfactorily, and is not particularly limited. In a case where the composition used for forming the adhesive layer 26 contains a polymerization initiator, a content of the polymerization initiator is preferably 0.1 to 20 parts by mass, more preferably 0.5 to 10 parts by mass, and still more preferably 1 to 10 parts by mass with respect to 100 parts by mass of the polymerizable compound contained in the above-described composition.

The adhesive layer 26 may contain inorganic particles or resin particles. In a case where the adhesive layer 26 contains inorganic particles or resin particles, unevenness is formed on the surface of the adhesive layer 26, and in a case where the adhesive layer 26 and the HC layer 14 are rolled in a state of being in direct contact with each other, friction between the adhesive layer 26 and the HC layer 14 can be reduced, which makes it possible to wind the adhesive layer 26 and the HC layer 14 without wrinkles, which is preferable. In addition, it is preferable that the friction between the adhesive layer 26 and the adherend can be reduced and the air remaining during pressure bonding can be suppressed.

As the inorganic particles contained in the adhesive layer 26, inorganic oxide particles are preferable, silica (silicon dioxide) particles, aluminum oxide particles, titanium dioxide particles, or zirconium oxide particles are more preferable, and silica particles are still more preferable. As the resin particles contained in the adhesive layer 26, crosslinked acrylic particles, crosslinked acrylic-styrene particles, or crosslinked styrene particles are preferable.

As a shape of the resin particles, a true sphere or an amorphous shape can be used. In addition, two or more different kinds of matte particles may be used in combination. An average primary particle diameter of the resin particles is preferably 20% to 300% of a film thickness of the adhesive layer, more preferably 50% to 200%, and particularly preferably 100% to 200 µm. In a case where the average primary particle diameter of the resin particles is set to be within the above-described range, it is possible to prevent the resin particles from falling off while imparting unevenness to the adhesive layer 26.

Examples of commercially available products of the resin particles include crosslinked acrylic resins MX-40T, MX-80H3wT, MX-150, MX-180TA, MX-300, MX-500, MX-1000, MX-1500H, MR-2HG, MR-7HG, MR-10HG, MR-3GSN, MR-5GSN, MR-7G, MR-10G, MR-5C, and MR-7GC, and styryl resin-based SX-350H and SX-500H (manufactured by Soken Chemical & Engineering Co., Ltd.); acrylic resins MBX-5, MBX-8, MBX-12, MBX-15, MBX-20, MB20X-5, MB30X-5, MB30X-8, MB30X-20, SBX-6, SBX-8, SBX-12, SBX-17, SSX-101, SSX-102, SSX-103, SSX-105, SSX-108, and SSX-110 (manufactured by Sekisui Plastics Co., Ltd.); and polyolefin resins CHEMIPEARL W100, W200, W300, W308, W310, W400, W401, W405, W410, W500, WF640, W700, W800, W900, W950, and WP100 (manufactured by Mitsui Chemicals, Inc.).

A content of the resin particles in the adhesive layer 26 is not particularly limited, but is preferably 0.1% by mass or more and more preferably 0.5% by mass or more with respect to the total mass of the adhesive layer 26. An upper limit thereof is not particularly limited, but is preferably 10% by mass or less and more preferably 3% by mass or less.

It is preferable that the inorganic particles consist of primary particles, and form secondary particles obtained by aggregation of the primary particles.

An average primary particle diameter of the inorganic particles is not particularly limited, but is preferably 5 to 50 nm and more preferably 5 to 15 nm.

An average secondary particle diameter of the inorganic particles is not particularly limited, but is preferably 100 to 500 nm.

A content of the inorganic particles in the adhesive layer 26 is not particularly limited, but is preferably 1% by mass or more and more preferably 9% by mass or more with respect to the total mass of the adhesive layer 26. The upper limit thereof is not particularly limited, but is preferably 40% by mass or less and more preferably 30% by mass or less.

The average primary particle diameters of the inorganic particles and the resin particles are measured by transmission electron microscope observation. Specifically, for 50 primary particles optionally selected, a diameter of a circle circumscribed about each primary particle is obtained, and an arithmetic average of these diameters is defined as the average primary particle diameter. An observation magnification of the transmission electron microscope is set to any magnification at which a primary particle diameter in a range of 500,000 times to 5,000,000 times can be discriminated.

The average secondary particle diameter described above is a value measured by the fitting of a perfectly spherical shape (refractive index of 1.46) using a laser diffraction scattering particle diameter distribution measurement device. As the analyzer, for example, MicroTrac MT3000 manufactured by MicroTrac Co., Ltd. can be used.

The adhesive layer 26 may contain a leveling agent.

As the leveling agent, a known leveling agent can be used, and examples thereof include surfactants, in which a fluorine-based surfactant or a silicone-based surfactant is preferable.

A fluorine content in the fluorine-based surfactant is preferably 3% to 40% by mass, more preferably 5% to 30% by mass, and still more preferably 7% to 25% by mass. The fluorine surfactant in which the fluorine content is in the above-described range is effective from the viewpoints of the uniformity in the thickness of the coating film and liquid saving properties.

A content of the leveling agent in the adhesive layer 26 is not particularly limited, but is preferably 0.005% to 0.5% by mass and more preferably 0.01% to 0.1% by mass with respect to the total mass of the adhesive layer 26.

The adhesive layer 26 may contain an antistatic agent. In a case where the adhesive layer 26 contains an antistatic agent, the generation of static electricity caused by friction between the adhesive layer 26 and a hand, air, or the like in a case of handling the laminate can be suppressed, the adhesion of environmental dust to the surface of the adhesive layer 26 due to static electricity can be prevented, and the generation of air bubble-like defects due to dust can be reduced.

As the antistatic agent, a known antistatic agent can be applied, and examples thereof include an ionic liquid, an ion-conducting polymer, an ion-conductive filler, and an electrically conductive polymer.

### <Ionic Liquid>

As the ionic liquid, a known ionic liquid can be applied within a range where the effect of the adhesive layer 26 is not impaired. Here, the "ionic liquid" means a molten salt (that is, an ionic compound) which is liquid at 25°C.

The ionic liquid is preferably an ionic liquid composed of a fluoroorganic anion and an onium cation. In a case where the ionic liquid is an ionic liquid composed of a fluoroorganic anion and an onium cation, charging that may occur due to friction with other objects can be further suppressed.

Specific examples of the ionic liquid include 1-hexylpyridinium bis(fluorosulfonyl)imide, 1-ethyl-3-methylpyridinium trifluoromethane sulfonate, 1-ethyl-3-methylpyridinium pentafluoroethane sulfonate, 1-ethyl-3-methylpyridinium heptafluoropropane sulfonate, 1-ethyl-3-methylpyridinium nonafluorobutane sulfonate, 1-butyl-3-methylpyridinium trifluoromethane sulfonate, 1-butyl-3-methylpyridinium bis(trifluoromethanesulfonyl)imide, 1-octyl-4-methylpyridinium bis(fluorosulfonyl)imide, 1-methyl-1-propylpyrrolidinium bis(trifluoromethanesulfonyl)imide, 1-methyl-1-propylpyrrolidinium bis(fluorosulfonyl)imide, 1-methyl-1-propylpiperidinium bis(trifluoromethanesulfonyl)imide, 1-methyl-1-propylpiperidinium bis(fluorosulfonyl)imide, 1-ethyl-3-methylimidazolium trifluoromethane sulfonate, 1-ethyl-3-methylimidazolium heptafluoropropane sulfonate, 1-ethyl-3-methylimidazolium bis(trifluoromethanesulfonyl)imide, 1-ethyl-3-methylimidazolium bis(fluorosulfonyl)imide, 1-hexyl-3-methylimidazolium bis(fluorosulfonyl)imide, trimethylpropylammonium bis(trifluoromethanesulfonyl)imide, lithium bis(trifluoromethanesulfonyl)imide, and lithium bis(fluorosulfonyl)imide.

The ionic liquid is available, for example, as IL-AP3 (KOEI CHEMICAL CO., LTD.).

### <Ionic Conductive Polymer>

As the ion-conducting polymer, a known ion-conducting polymer can be applied within a range in which the effect of the adhesive layer 26 is not impaired.

Examples of the ionic conductive polymer include an ionic conductive polymer obtained by polymerizing or copolymerizing a monomer having a quaternary ammonium base.

The ionic conductive polymer is available, for example, as Acrit 1SX series (for example, product name 1SX-1055F, Taisei Fine Chemical Co., Ltd.).

### <Ionic Conductive Filler>

As the ion-conducting filler, a known ion-conducting filler can be applied within a range in which the effect of the adhesive layer 26 is not impaired.

Examples of the ionic conductive filler include tin oxide, antimony oxide, indium oxide, cadmium oxide, titanium oxide, zinc oxide, indium, tin, antimony, gold, silver, copper, aluminum, nickel, chromium, titanium, iron, cobalt, copper iodide, indium oxide/tin oxide (ITO), and antimony oxide/tin oxide (ATO).

The ionic conductive filler is available, for example, as FS series (for example, product name FS-10D, ISHIHARA SANGYO KAISHA, LTD.).

### <Electrically Conductive Polymer>

As the electrically conductive polymer, a known electrically conductive polymer can be applied within a range in which the effect of the adhesive layer 26 is not impaired.

Examples of the electrically conductive polymer include polythiophene, polyaniline, polypyrrole, polyethyleneimine, and arylamine-based polymers. Specific examples of the electrically conductive polymer include (3,4-ethylenedioxythiophene)-poly(styrene sulfonic acid).

As the polythiophene, a polymer compound including poly(3,4-ethylenedioxythiophene) (PEDOT) is preferable, and a conductive polymer compound consisting of poly(3,4-ethylenedioxythiophene) and polystyrene sulfonic acid (hereinafter, abbreviated as "PEDOT/PSS") is particularly preferable.

Examples of a commercially available product of the polythiophene include Clevios series (Heraeus Holding), ORGACON series (AGFA Materials Japan LTD.), Denatron P-502RG, PT-432ME, and N8-2-1 (Nagase ChemteX Corporation), and SEPLEGYDA AS-X, AS-D, AS-H, AS-F, HC-R, HC-A, SAS-P, SAS-M, and SAS-F (Shin-Etsu Polymer Co., Ltd.).

Examples of the polyaniline include ORMECON series (Nissan Chemical Corporation).

Examples of the polypyrrole include product numbers 482552 and 735817 (Sigma-Aldrich, Co. LLC.).

In the present disclosure, as the electrically conductive polymer, the above-described commercially available products can be preferably used.

The adhesive layer 26 may contain only one kind of antistatic agent or may contain two or more kinds of antistatic agents.

From the viewpoint of antistatic properties, a content of the antistatic agent is preferably 0.1% by mass to 20% by mass, more preferably 1% by mass to 10% by mass, and particularly preferably 3% by mass to 10% by mass with respect to the total mass of the adhesive layer 26.

In a case where the adhesive layer 26 contains the antistatic agent, a surface electrical resistance value of the adhesive layer 26 is preferably 1.0 × 10¹⁴ Ω/□ or less and more preferably 1.0 × 10¹¹ Ω/□ or less. In a case where the surface electrical resistance value of the adhesive layer 26 is as described above, the generation of static electricity due to the friction between the adhesive layer 26 and the object can be further suppressed.

The surface electrical resistance value of the antistatic layer is preferably 1.0 × 10⁶ Ω/□ or more and more preferably 1.0 × 10⁷ Ω/□ or more.

The adhesive layer 26 is preferably formed by applying a composition for forming an adhesive layer.

The composition for forming an adhesive layer is a composition containing the above-described components and used for forming the adhesive layer 26.

From the viewpoint of coating properties, the composition for forming an adhesive layer preferably contains a solvent.

The type of the solvent is not particularly limited, and examples thereof include water and organic solvents, in which an organic solvent is preferable. Examples of the organic solvent include a ketone, an alkyl halide, an amide, a sulfoxide, a heterocyclic compound, a hydrocarbon, an ester, and an ether.

A method of applying the composition for forming an adhesive layer is not particularly limited, and examples thereof include a wire bar coating method, a curtain coating method, an extrusion coating method, a direct gravure coating method, a reverse gravure coating method, a die-coating method, a spin coating method, a dip coating method, a spray coating method, and a slide coating method.

A coating film obtained by the coating may be subjected to a drying treatment as necessary.

Examples of the drying treatment include a heating treatment. A heating temperature in the heating treatment is not particularly limited, but is preferably 50°C to 150°C and more preferably 60°C to 140°C. A heating time is not particularly limited, but is preferably 0.5 to 20 minutes and more preferably 0.5 to 10 minutes.

A surface treatment may be performed on the surface of the formed adhesive layer 26 (surface opposite to the reflective layer or the polarization conversion layer) as necessary.

For example, in order to reduce a water contact angle of the surface of the adhesive layer 26, a hydrophilization treatment may be performed on the surface of the adhesive layer 26. Examples of the hydrophilization treatment include plasma treatment, ultraviolet irradiation treatment, corona treatment, and electron beam irradiation treatment, in which corona treatment is preferable.

Conditions of the hydrophilization treatment are appropriately selected according to the type of treatment to be performed, and it is preferable that the conditions are adjusted to be in the above-described range of the water contact angle of the surface of the adhesive layer 26.

From the viewpoint of solubility of air bubbles and adhesion to the adherend, the reflective layer, or the polarization conversion layer, an average thickness (film thickness) of the adhesive layer 26 is preferably 0.1 µm or more, more preferably 0.2 µm or more, still more preferably 0.5 µm or more, and particularly preferably 1 µm or more. The upper limit thereof is not particularly limited, but from the viewpoint of thinning, it is preferably 100 µm or less, more preferably 50 µm or less, and still more preferably 20 µm or less.

As a method of measuring the above-described average thickness, the adhesive layer 26 is cut with a microtome to cut out a cross section, the cross section is observed with a scanning electron microscope (SEM), the thicknesses of the adhesive layer 26 at three different positions are measured, and an average value (arithmetic average value) of the measured values is calculated and defined as the average thickness.

The adhesive layer 26 may have a monolayer structure or a multilayer structure of two or more layers.

In a case where the adhesive layer 26 has a multilayer structure, an average value of the total thickness of the adhesive layer 26 may be in the above-described range.

In addition, a roughening treatment may be performed on the surface of the adhesive layer 26. By performing the roughening treatment, unevenness can be imparted to the surface of the adhesive layer 26, and air remaining during pressure bonding can be suppressed.

Examples of the roughening treatment include a sanding treatment, an embossing process, and a blast treatment. The sanding treatment is a treatment of forming an uneven shape on a surface of an object to be polished, using a base material such as a disk or a belt which holds abrasive grains. The embossing process is a process of transferring a shape by pressing a mold having a predetermined uneven shape at a high temperature and a high pressure to form an uneven shape. The blast treatment is a treatment of forming an uneven shape on a surface of an object to be blasted by jetting abrasive grains.

The laminate according to the embodiment of the present invention is preferably used for an application in which the laminate is bonded to glass through the above-described adhesive layer 26, and more preferably used for an application in which the laminate is bonded to a windshield glass through the above-described adhesive layer 26.

### [Bonded Body]

The bonded body according to the embodiment of the present invention includes an adherend and the laminate according to the embodiment of the present invention bonded to the adherend.

The adherend may have a curved surface, and various known adherends can be used. Examples thereof include curved glass used for window glass, glass used for interior and exterior of a building, and curved glass used for a lens.

In the present invention, from the reason that wrinkles generated between the adhesive layer and the object to be bonded (glass) can be suppressed, an aspect in which another glass is further provided on a side of the bonded body according to the embodiment of the present invention opposite to a side to which the glass is bonded, that is, the laminate according to the embodiment of the present invention is applied to laminated glass is preferable.

FIG. 6 shows a schematic cross-sectional view of an example of the bonded body according to the embodiment of the present invention.

The bonded body in the example shown in the drawing includes glass 27A and a laminate 10B bonded to the glass 27A, and further includes glass 27B on a side of the laminate 10B opposite to a side to which the glass 27A is bonded.

In addition, the laminate 10B has a layer configuration in which the adhesive layer 26, the transparent resin layer 16, the reflective layer 20, and the interlayer 19 are provided in this order from the glass 27A side.

As described above, it is preferable that the bonding to the glass is performed through the adhesive layer, but in the aspect of bonding to laminated glass, as shown in FIG. 6, the bonding to at least one glass may be performed through the adhesive layer.

Another aspect of the bonded body according to the embodiment of the present invention includes a windshield glass and the laminate according to the embodiment of the present invention bonded to the windshield glass.

The windshield glass is not limited, and various windshield glasses used as a windshield glass (windscreen glass) in a vehicle such as an automobile, a ship, an aircraft, a train, a motorcycle, or the like can be used.

Therefore, the windshield glass may be one glass or laminated glass in which a plurality of glasses are laminated. In addition, the laminated glass may have an interlayer film such as polyvinyl butyral therebetween or may not have an interlayer film.

In the present invention, from the reason that wrinkles generated between the adhesive layer and the object to be bonded (windshield glass) can be suppressed, it is preferable that the bonded body according to the embodiment of the present invention further includes another windshield glass on a side opposite to a side to which the windshield glass is bonded, that is, an aspect in which the laminate according to the embodiment of the present invention is applied to a windshield glass made of laminated glass is preferable.

It is preferable that such a bonded body according to the embodiment of the present invention is manufactured by a manufacturing method of a bonded body according to the embodiment of the present invention described below.

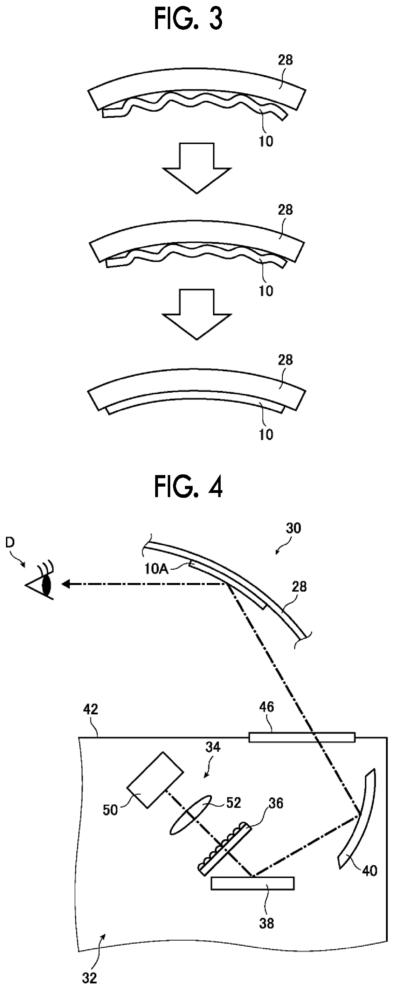

FIGS. 2 and 3 conceptually show an example of a manufacturing method of a bonded body according to the embodiment of the present invention.

In the following description, as an example, a case where the laminate according to the embodiment of the present invention is bonded to a windshield glass will be described. However, the present invention is not limited thereto, and various known adherends can be used.

Examples of the adherend other than the windshield glass include various glasses and resin substrates described above.

In the manufacturing method of a bonded body according to the embodiment of the present invention, first, as shown in the upper part of FIG. 2, a windshield glass 28 and a laminate 10 according to the embodiment of the present invention are laminated. In this case, the lamination is performed such that the adhesive layer 26 of the laminate 10 faces the windshield glass 28.

Next, as shown in the second stage of FIG. 2, the windshield glass 28 and the laminate 10 according to the embodiment of the present invention are accommodated in a bag 106 such as a rubber bag as in the example shown in FIG. 7.

Here, depending on the curvature of the windshield, in a case where the laminate 10 according to the embodiment of the present invention is laminated, the laminate 10 may follow the curved shape of the windshield glass 28, and thus wrinkles may occur in the laminate 10 as shown in the upper part of FIG. 3.

In order to suppress the above-described wrinkles, the laminate 10 according to the embodiment of the present invention preferably has a bending stiffness coefficient S of 0.4 × 10⁶ [GPa·µm³] or more, and more preferably 0.5 × 10⁶ [GPa·µm³] or more. In a case where the laminate 10 has the above-described bending stiffness coefficient, large wrinkles do not occur locally due to the pressing by the bag 106, and as shown in the middle part of FIG. 3, the laminate 10 is pressed by the bag 106 in a state where small wrinkles occur on the entire surface.

Further, thermocompression bonding is performed in the same manner as described above. That is, the inside of the bag 106 is heated while being reduced in pressure, so that the laminate 10 is pressed by the bag 106, and as a result, the laminate 10 is pressed against the windshield glass 28 and is thermocompression-bonded.

A sheet such as a film, rubber, or cloth may be interposed between the laminate 10 and the bag 106, and the thermocompression bonding may be performed. By performing the thermocompression bonding with the sheet interposed therebetween, it is possible to suppress the indentation marks generated by the dust mixed between the laminate 10 and the bag 106 being pressed against the laminate 10. In addition, in a case where the sliding properties of the laminate 10 and the bag 106 are poor, the deaeration unevenness can be reduced by interposing a sheet having good sliding properties between both the laminate 10 and the bag 106.

The material of the above-described film is not particularly limited, and examples thereof include an acrylic resin film, a polycarbonate (PC) resin film, a cellulose ester-based resin film such as a triacetyl cellulose (TAC) resin film, a polyethylene terephthalate (PET) resin film, a polyolefin resin film, a polyester resin film, and an acrylonitrile-butadiene-styrene copolymer film. From the viewpoint of heat resistance, a polycarbonate resin film, a cellulose ester-based resin film, and a polyethylene terephthalate-based resin film are preferable.

From the viewpoint of improving the sliding properties, the above-described film may have unevenness on the surface. The unevenness on the surface can be imparted by a known method such as adding a matting agent to the film or performing embossing.

From the viewpoint of reducing the adhesion of foreign matter during the thermocompression bonding, it is preferable that the above-described film is subjected to an antistatic treatment on the surface. The antistatic treatment can be performed by a known method such as adding an antistatic agent.

The material of the above-described rubber is not particularly limited, and examples thereof include butadiene rubber (BR), styrene-butadiene rubber (SBR), chloroprene rubber (CR), isoprene rubber (IR), acrylonitrile-butadiene rubber (NBR), ethylene-propylene-diene rubber (EPDM), butyl rubber (IIR), chloroprene rubber (CR), silicone rubber, and fluororubber. From the viewpoint of heat resistance, EPDM rubber, silicone rubber, or fluororubber is preferable. These may be used alone or in combination of two or more kinds thereof.

From the viewpoint of improving the sliding properties, the above-described rubber may have unevenness on the surface. The unevenness on the surface can be imparted by a known method such as adding a matting agent to the rubber or performing embossing.

From the viewpoint of reducing the adhesion of foreign matter during the thermocompression bonding, it is preferable that the above-described rubber is subjected to an antistatic treatment on the surface. The antistatic treatment can be performed by a known method such as adding an antistatic agent.

The rubber may be formed into a film by a known method, or a commercially available product may be used. Examples of the commercially available rubber include EB240N, EB250N, EB260N, EB270N, EB280W, EB265N, EB565N, and EB360E2 (all of which are EPDM rubber, manufactured by Macselec Kureha Corporation); SW940D, SW950D, SW960D, SW970D, SR950D, SR930T, SR940T, SH950T, and SW955T (all of which are silicone rubber, manufactured by Macselec Kureha Corporation); and FB750N, FB760N, FB770N, FB780N, FB880N, and FB970N (all of which are fluororubber, manufactured by Macselec Kureha Corporation).

From the viewpoint of reducing the generation and adhesion of foreign matter during the thermocompression bonding, the above-described fabric is preferably formed of a dust-free fabric, and from the viewpoint of antistatic properties, it is preferable that a conductive carbon yarn is sewn.

The fabric may be produced by a known method, or a commercially available product may be used. Examples of the commercially available fabric include HM-CLC (manufactured by Tanimura Corporation).

It is preferable that the film, the rubber, the fabric, and the like have the same size or a larger size than the laminate 10 because the pressing by the bag 106 is uniformly transmitted to the laminate 10.

The film, the rubber, the fabric, and the like may have the same size as the windshield glass 28 or may have a larger size.

The thermocompression bonding may be vacuum thermocompression bonding, and conditions such as the degree of vacuum and the heating temperature may be appropriately set according to the forming material of the adhesive layer 26, the heat resistance of the forming material of the other laminates 10, the thickness of the laminate 10, and the like.

After the thermocompression bonding is completed, the laminate 10 and the windshield glass 28 are taken out from the bag, and as shown in the third stage of FIG. 2, the laminate 10 and the windshield glass 28 are further thermocompression bonded by the autoclave in the same manner as described above.

After the thermocompression bonding by the autoclave is completed, the bonded body is taken out from the autoclave and cooled as shown in the lower part of FIG. 2.

Here, in the laminate 10 according to the embodiment of the present invention, the oxygen permeability coefficient of the base material is 300 cc/m²·day·atm or less as described above. Therefore, as shown in the lower part of FIG. 3, air bubble-like defects are eliminated by heating and pressurization in the autoclave.

Conditions such as the pressurization force and the heating temperature in the autoclave may be appropriately set according to the forming material of the adhesive layer 26, the heat resistance of the forming material of the other laminates 10, the thickness of the laminate 10, and the like.

The image display system according to the embodiment of the present invention includes the laminate according to the embodiment of the present invention and an image display device that projects an image onto the laminate according to the embodiment of the present invention.

FIG. 4 conceptually shows an example in which the image display system according to the embodiment of the present invention is used for a head-up display system. In the following description, the head-up display system will also be referred to as a HUD.

A HUD 30 shown in FIG. 4 includes a laminate 10A according to the embodiment of the present invention and a projector 32.

As conceptually shown in FIG. 5, the laminate 10A is bonded to a windshield glass 28 with the adhesive layer 26 on the windshield glass 28 side.

The laminate 10A is obtained by bonding the laminate 10 shown in FIG. 1 to the windshield glass 28 and then peeling off the protective film 12.

The projector 32 shown in FIG. 4 is configured to include an image forming unit 34, an intermediate image screen 36, a mirror 38, and a concave mirror 40.

In the HUD 30 shown in FIG. 4, as indicated by a one-dot chain line, projection light projected by the projector 32 is transmitted through a transmission window 46 provided in a dashboard 42 of a vehicle on which the HUD 30 is mounted, is incident on the laminate 10A bonded to the windshield glass 28, is reflected by the reflective layer 20, and is observed by a driver D (one-dot chain line).

As in a known HUD, in the HUD 30 of the shown example, the driver D observes a virtual image of an image projected onto the windshield glass 28.

The image forming unit 34 includes a liquid crystal display (LCD) 50 and a projection lens 52.

Both the LCD 50 and the projection lens 52 are known to be used in a projector for a HUD. The image forming unit 34 projects an image displayed on the LCD 50 onto the intermediate image screen 36 by the projection lens 52.

In the projector 32, the intermediate image screen 36 converts the projected image into a real image, and the real image is reflected by the mirror 38 and the concave mirror 40 to a predetermined optical path. As described above, the reflected light is transmitted through the transmission window 46 provided in the dashboard 42, is incident on the laminate 10A, is reflected, and the projected image is observed by the driver D.

In a preferable aspect, the LCD 50 displays an image (projected image) of p-polarized light. That is, in a preferable aspect, in the HUD 30 according to the embodiment of the present invention, the projector 32 emits projection light of p-polarized light.

Accordingly, in a case where the LCD 50 does not display the projection light of p-polarized light, for example, it is preferable that a polarizer that converts the projection light from the LCD 50 into p-polarized light is provided in the middle of the optical path of the projection light from the LCD 50 to the concave mirror 40. As the polarizer, a known polarizer can be used.

Alternatively, the polarizer that converts the projection light from the LCD 50 into p-polarized light may be provided outside the projector 32, that is, in the middle of the optical path of the projection light from the concave mirror 40 to the windshield glass 28.

In the laminate 10A of the example shown in the drawing, as an example, a cholesteric liquid crystal layer is used as the reflective layer 20.

In addition, in the laminate 10A of the example shown in the drawing, as an example, the retardation layer 18 is a 1/4 wave plate. The 1/4 wave plate converts the incident p-polarized light into circularly polarized light in a revolution direction that is selectively reflected by the reflective layer 20, that is, the cholesteric liquid crystal layer.

Accordingly, in the laminate 10A, the retardation layer 18 converts p-polarized light into circularly polarized light, the reflective layer 20 reflects the circularly polarized light, and the retardation layer 18 converts the circularly polarized light back into p-polarized light. As a result, the laminate 10A selectively reflects p-polarized light.

As is well known, polarized sunglasses selectively shield S-polarized light. Accordingly, the projector 32 emits the projection light of p-polarized light, so that a projection image of p-polarized light can be projected, and even in a case where the driver D wears polarized sunglasses, the image projected by the HUD 30 can be observed.

In the projector constituting the HUD according to the embodiment of the present invention, the image forming unit 34 is not limited to the one using the LCD 50, and various known image forming means used in the projector of the HUD can be used.

As an example, various known image forming means used in the projector (imager) of the HUD, such as a fluorescent display tube, a liquid crystal on silicon (LCOS), an organic electroluminescence (organic EL) display, and a digital light processing (DLP) using a digital micromirror device (DMD), can be used. In these image forming means, as in the LCD 50, the projection image is projected onto the intermediate image screen 36 by the projection lens.

In addition, as the image forming means of the image forming unit 34, image forming means using light beam scanning can also be used.

Next, the projection light emitted from the image forming unit 34 is real-imaged (visible-imaged) by the intermediate image screen 36.

The intermediate image screen 36 is not limited, and various known intermediate image screens that real-image a projection image in the projector of the HUD can be used. Specifically, examples of the intermediate image screen 36 include a diffusion film, a microlens array, and a screen for rear projection.

The projection light that is real-imaged by the intermediate image screen 36 is reflected by the mirror 38 and the concave mirror 40 to a predetermined optical path, is transmitted through the transmission window 46 provided on the dashboard 42, is projected onto the laminate 10A bonded to the windshield glass 28, and is observed by the driver D (see the one-dot chain line).

The mirror 38 is a known mirror used for adjusting the optical path of the projection light in the projector. In addition, the mirror 38 may be a so-called cold mirror that reflects visible light and transmits infrared light to prevent the constituent members of the projector 32 from being heated by sunlight incident from the windshield glass.

On the other hand, the concave mirror 40 is a known concave mirror used in the projector of the HUD that magnifies and projects the projection light.

In the projector 32 in the example shown in the drawing, the mirror 38 and the concave mirror 40 are used as members that change the optical path of the projection light, but the present invention is not limited thereto.

For example, the projector 32 may include only one of the mirror 38 or the concave mirror 40, or may include one or more other light reflecting elements such as a free-form surface mirror in addition to or instead of the mirror 38 and/or the concave mirror 40.

That is, the projector constituting the HUD according to the embodiment of the present invention can be configured using various light reflecting elements.

As described above, the projector 32 emits the projection light of p-polarized light.

The projection light of p-polarized light projected by the projector 32 and transmitted through the transmission window 46 is transmitted through the hard coat layer 14 and the transparent resin layer 16 and is incident on the retardation layer 18. As described above, the retardation layer 18 is a 1/4 wave plate, and converts the incident projection light of p-polarized light into circularly polarized light in a revolution direction that is selectively reflected by the reflective layer 20 (cholesteric liquid crystal layer).

The projection light of circularly polarized light converted by the retardation layer 18 is reflected by the reflective layer 20, is incident on the retardation layer 18 again, and is converted into the original p-polarized light by the retardation layer 18.

The projection light converted into p-polarized light by the polarization conversion layer 24 is irradiated to the observation position of the driver D. Here, since the projection image is p-polarized light, as described above, the projection image can be appropriately observed even in a case where the driver D wears polarized sunglasses.

In addition, as described above, the laminate according to the embodiment of the present invention can be bonded to an adherend having a curved surface such as the windshield glass 28 without causing wrinkles or the like. Therefore, the HUD 30 that reflects the projection light from the projector 32 by the laminate 10A which is the laminate according to the embodiment of the present invention can project a high image quality image without disturbance of the image due to wrinkles or the like of the laminate 10A, regardless of whether or not the polarized sunglasses are worn.

On the other hand, in a case where s-polarized light that causes glare, such as reflected light from a puddle and reflected light from a bonnet, is incident from the outside of the vehicle, the s-polarized light is transmitted through the windshield glass 28, is incident on the laminate 10A, and is transmitted through the adhesive layer 26 to be incident on the polarization conversion layer 24.

The s-polarized light incident on the polarization conversion layer 24 is converted into elliptically polarized light in a revolution direction corresponding to the s-polarized light by, for example, the helical structure of the liquid crystal compound contained in the polarization conversion layer 24.

The elliptically polarized light transmitted through the polarization conversion layer 24 is then incident on the reflective layer 20.

As described above, the reflective layer 20 is a cholesteric liquid crystal layer that selectively reflects circularly polarized light converted from p-polarized light by the retardation layer 18. Therefore, the elliptically polarized light in the revolution direction corresponding to the s-polarized light is transmitted through the reflective layer 20. In addition, by being transmitted through the reflective layer 20 (cholesteric liquid crystal layer), the elliptically polarized light in the revolution direction corresponding to the s-polarized light is converted into circularly polarized light in the revolution direction corresponding to the s-polarized light.

The circularly polarized light transmitted through the reflective layer 20 is incident on the retardation layer 18.

As described above, the retardation layer 18 is a 1/4 wave plate that converts p-polarized light into circularly polarized light that is selectively reflected by the cholesteric liquid crystal layer constituting the reflective layer 20. Therefore, the circularly polarized light in the revolution direction corresponding to the s-polarized light incident on the retardation layer 18 is transmitted through the retardation layer 18 and is converted into s-polarized light.

The s-polarized light that causes glare and is incident from the outside of the vehicle is transmitted through the laminate 10A as s-polarized light in this way. Therefore, the s-polarized light is shielded by the polarized sunglasses even in a case where the s-polarized light reaches the driver D. That is, in a case where the laminate according to the embodiment of the present invention includes the polarization conversion layer, in a case where the laminate is used for the HUD, the change in the polarization of the external light due to the retardation layer and the reflective layer can be compensated for, and the s-polarized light that causes glare and is incident from the outside of the vehicle can be transmitted as s-polarized light, and the light can be shielded by the polarized sunglasses.

The image display system according to the embodiment of the present invention is not limited to the HUD as in the example shown in the drawing.

That is, the image display system according to the embodiment of the present invention can be used for various known image display systems as long as the image display system includes the laminate according to the embodiment of the present invention and an image display device that projects an image onto the laminate according to the embodiment of the present invention.

Hereinbefore, the laminate, the bonded body, the image display system, and the manufacturing method of a bonded body according to the embodiment of the present invention have been described in detail. However, the present invention is not limited to the above-described embodiments, and various improvements or modifications can be made within a range not departing from the scope of the present invention.

### Examples

Hereinafter, the features of the present invention will be described in more detail with reference to Examples. Materials, reagents, amounts of substances and percentages thereof, and operations illustrated in the following examples can be suitably changed within a range not departing from the gist of the present invention. Accordingly, the scope of the present invention is not limited to the following example.

### <Preparation of Transparent Resin Layer 1>

A cellulose acylate film having a thickness of 40 µm was produced by the same production method as in Example 20 of WO2014/112575A, except that UV-531 manufactured by Teishin Chemical Industry Co., Ltd. was used as an ultraviolet absorber and the amount of the ultraviolet absorber added was 3 phr (per hundred resin).

After passing the produced cellulose acylate film through a dielectric heating roll at a temperature of 60°C to raise the surface temperature of the film to 40°C, one side of the film was coated with an alkaline solution with formulation provided as below at a coating amount of 14 mL/m² using a bar coater, and was allowed to stay under a steam-type far infrared heater (manufactured by Noritake Co., Ltd.) heated to 110°C for 10 seconds.

Next, pure water was applied thereto at 3 mL/m² using a bar coater in the same manner.

Next, washing with water using a fountain coater and dewatering using an air knife were repeated three times, and then the film was allowed to stay in a drying zone at 70°C for 5 seconds to be dried, thereby producing a transparent resin layer 1.

| Composition of Alkali solution | |
|---|---|
| . Potassium hydroxide | 4.7 parts by mass |
| . Water | 15.7 parts by mass |
| . Isopropanol | 64.8 parts by mass |
| · Surfactant (C₁₆H₃₃O(CH₂CH₂O)₁₀H) | 1.0 parts by mass |
| · Propylene glycol | 14.9 parts by mass |

### <Preparation of Protective Film P-1>

As a resin constituting the base material layer, NOVATEC HF560 (manufactured by Japan Polyethylene Corporation) was prepared. As an ethylene-vinyl acetate copolymer constituting the pressure-sensitive adhesive layer, ULTRASEN (registered trademark) 750 (manufactured by Tosoh Corporation) was prepared. In addition, NOVATEC (registered trademark) LC522 (manufactured by Japan Polyethylene Corporation) was prepared as a polyethylene resin constituting the pressure-sensitive adhesive layer.

Next, a resin mixture for a pressure-sensitive adhesive layer, in which the ethylene-vinyl acetate copolymer and the polyethylene resin were blended at a mass ratio of 50:50, was prepared. Next, using a T-die type composite film machine having two extruders, the resin constituting the base material layer and the resin mixture for a pressure-sensitive adhesive layer were charged into each extruder, the discharge amount of each extruder was adjusted (220°C) so that the base material layer thickness ratio was 96% and the pressure-sensitive adhesive thickness ratio was 4%, and a two-layer laminated film (polyethylene film/pressure-sensitive adhesive layer) as a protective film P-1 was produced with a film thickness of 300 µm.

### <Preparation of Protective Film P-2>

A PET film (16KS40, manufactured by Toray Industries, Inc.) having a thickness of 16 µm was prepared as a base material layer, and MF-58 (pressure-sensitive adhesive layer thickness: 12 µm, manufactured by Tomogawa Co., Ltd.) was prepared as a pressure-sensitive adhesive layer. After peeling off the light release film of MF-58, the exposed pressure-sensitive adhesive layer and the surface of the PET film were brought into contact with each other, and the pressure-sensitive adhesive layer and the PET film were bonded to each other while applying a load of 2 kg with a rubber roller, thereby producing a protective film P-2 having a configuration of PET film/pressure-sensitive adhesive layer/heavy release film.

### <Preparation of Protective Film P-3>

A protective film P-3 was produced in the same manner as in the protective film P-2, except that a PET film (Lumirror T60, manufactured by Toray Industries, Inc.) having a thickness of 75 µm was used as a base material layer.

### <Preparation of Protective Film P-4>

A protective film P-4 was produced in the same manner as in the protective film P-2, except that a PET film (Lumirror T60, manufactured by Toray Industries, Inc.) having a thickness of 125 µm was used as a base material layer.

### <Preparation of Protective Film P-5>

A protective film P-5 was produced in the same manner as in the protective film P-2, except that a PET film (Lumirror T60, manufactured by Toray Industries, Inc.) having a thickness of 250 µm was used as a base material layer.

### <Preparation of Protective Film P-6>

A protective film P-6 was produced in the same manner as in the protective film P-2, except that a PET film (Barrierlox 1011SBR2, manufactured by Toray Advanced Film Co., Ltd.) with an alumina layer having a thickness of 12 µm was used as a base material layer.

### <Preparation of Protective Film P-7>

A protective film P-7 was produced in the same manner as in the protective film P-1, except that the film thickness was set to 200 µm.

### [Production of Base Material]

### <Production of Base Material 1>

The pressure-sensitive adhesive layer of the protective film P-1 was bonded to a surface of the base material 1, which was opposite to the surface of the transparent resin layer 1 treated with the alkaline solution, with a surface in contact with the surface of the base material 1 while applying a load of 2 kg with a rubber roller, thereby producing a base material 1 having a configuration of a polyethylene film/pressure-sensitive adhesive layer/transparent resin layer 1.

### <Production of Base Material 2>

After peeling off the heavy release film of the protective film P-2, the exposed pressure-sensitive adhesive layer was bonded to a surface of the base material 2, which was opposite to the surface of the transparent resin layer 1 treated with the alkaline solution, with a surface in contact with the surface of the base material 2 while applying a load of 2 kg with a rubber roller, thereby producing a base material 2 having a configuration of a PET film/pressure-sensitive adhesive layer/transparent resin layer 1.

### <Production of Base Material 3>

A base material 3 was produced in the same manner as the base material 2, except that the protective film P-3 was used instead of the protective film P-2.

### <Production of Base Material 4>

A base material 4 was produced in the same manner as the base material 2, except that the protective film P-4 was used instead of the protective film P-2.

### <Production of Base Material 5>

A base material 5 was produced in the same manner as the base material 2, except that the protective film P-5 was used instead of the protective film P-2.

### <Production of Base Material 6>

A base material 6 was produced in the same manner as the base material 2, except that the protective film P-6 was used instead of the protective film P-2.

### <Production of Base Material 7>

### (Preparation of Curable Composition for Forming Hard Coat Layer (HC layer))

Components were mixed according to formation shown in Table 1 and filtered through a polypropylene filter having a pore size of 10 µm, and thereby curable composition HC-1 for forming an HC layer was prepared.

The blending amount of each component shown in Table 2 is represented in part by mass.

**[Table 1]**

| | Curable composition HC-1 for forming HC layer | |
|---|---|---|
| Radically polymerizable compound | DPHA (manufactured by Nippon Kayaku Co., Ltd.) | 42.8 |
| Cationically polymerizable compound | CYCLOMER M100 (manufactured by Daicel Corporation) | 5.10 |
| Radical polymerization initiator | IRGACURE 184 (manufactured by BASF SE) | 2.04 |
| Cationic polymerization initiator | PAG-1 | 0.41 |
| Ultraviolet absorber | TINUVIN 928 (manufactured by BASF SE) | 0.59 |
| Antifouling agent | RS-90 (manufactured by DIC Corporation) | 0.31 |
| Solvent | Methyl ethyl ketone (MEK) | 15.4 |
| | Methyl isobutyl ketone (MIBK) | 18.6 |
| | Methyl acetate | 14.7 |

PAG-1 is the following compound.

Cationic photopolymerization initiator (iodonium salt compound) PAG-1

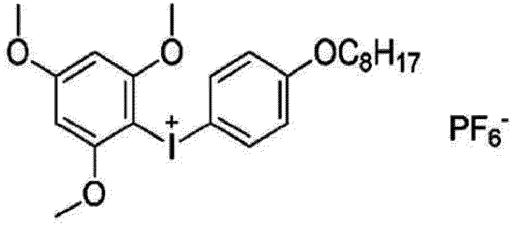

### <Formation of Hard Coat Layer>

The curable composition HC-1 for forming an HC layer was applied onto a surface of the transparent resin layer 1 produced above, which was opposite to the surface treated with the alkaline solution, and cured to form an HCl layer having a film thickness of 6 µm.

The method of applying and curing was specifically as follows. The curable composition HC-1 for forming an HC layer was applied under a condition of a transportation speed of 30 m/min by a die coating method using a slot die described in Example 1 of JP2006-122889A, and dried at an atmosphere temperature of 60°C for 60 seconds to obtain a coating film. Thereafter, the coating film was further irradiated with ultraviolet rays at an illuminance of 150 mW/cm² and an irradiation amount of 600 mJ/cm² using an air-cooled metal halide lamp (manufactured by Eye Graphics Co., Ltd.) at an oxygen concentration of about 0.1% by volume and 160 W/cm under nitrogen purge, and the coating film was cured to form an HC layer, thereby obtaining a film HC1 having a configuration of HC layer/transparent resin layer 1.

After peeling off the heavy release film of the protective film P-4, the exposed pressure-sensitive adhesive layer was bonded to the HC layer side of the film HC1 while applying a load of 2 kg with a rubber roller such that the surfaces were in contact with each other, thereby producing a base material 7 having a configuration of PET film/pressure-sensitive adhesive layer/HC layer/transparent resin layer 1.

### <Production of Base Material 8>

(Preparation of Composition for Forming Reflective Layer, Composition for Forming Retardation Layer, and Composition for Forming Polarization Conversion Layer)

Each component was mixed according to the formulation shown in Table 2 below and filtered through a polypropylene filter having a pore diameter of 10 µm to prepare compositions BG1, R1, and IR1 for forming a reflective layer, a composition A1 for forming a retardation layer, and a composition TW1 for forming a polarization conversion layer.

The blending amount of each component shown in Table 2 is represented in part by mass.

The mixture 1, the alignment control agent 1, and the alignment control agent 2 are the following compounds.

### • Mixture 1

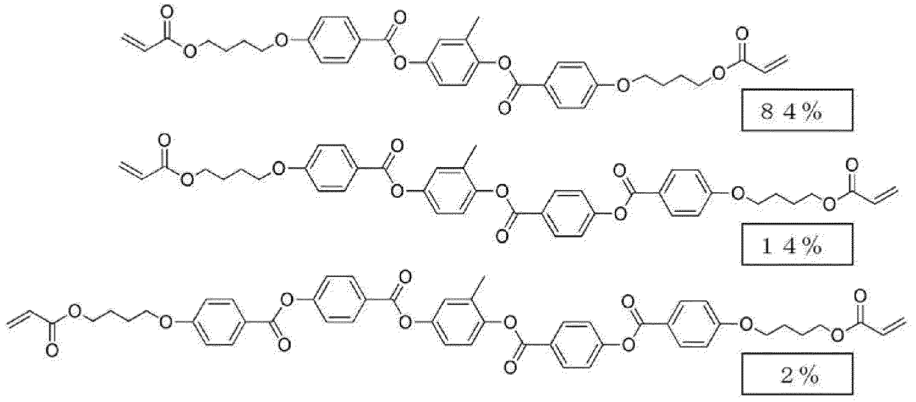

Numerical value represents % by mass

Alignment control agent 1

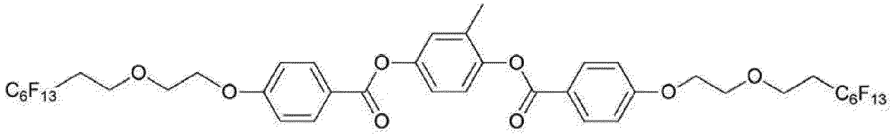

Aligment control agent 2

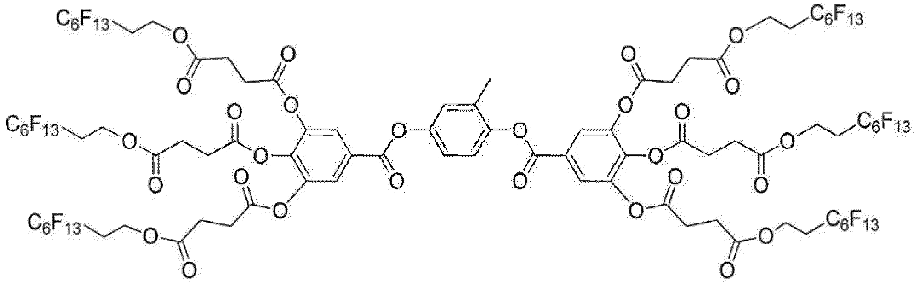

**[Table 2]**

| | Composition for forming reflective layer | | | | | |
|---|---|---|---|---|---|---|
| | Composition for forming retardation layer | BG1 | R1 | IR1 | A1 | TW1 |
| | Composition for forming polarization conversion layer | | | | | |
| Polymerizable liquid crystal compound | Mixture 1 | 100 | 100 | 100 | 100 | 100 |
| Chiral agent | LC756 (manufactured by BASF SE) | 6.37 | 4.08 | 3.36 | | 0.32 |
| Polymerization initiator | IRGACURE OXE01 (manufactured by BASF SE) | 1.00 | 1.00 | 1.00 | 1.00 | 1.00 |
| Alignment control agent | Alignment control agent 1 | 0.05 | 0.05 | 0.05 | 0.05 | 0.05 |
| | Alignment control agent 2 | 0.02 | 0.02 | 0.02 | 0.01 | 0.02 |
| Solvent | Methyl ethyl ketone (MEK) | 134.30 | 131.44 | 130.54 | 126.33 | 126.74 |

### (Formation of Alignment Film)

A coating liquid for forming an alignment film, having the following formulation, was applied onto the surface of the transparent resin layer 1 obtained above, which had been treated with an alkaline solution, using a wire bar coater at 24 mL/m², and dried with hot air at 100°C for 120 seconds to obtain an alignment film having a thickness of 0.5 µm.

| Composition of alignment film forming coating liquid | |
|---|---|
| · Modified polyvinyl alcohol illustrated below | 28 parts by mass |
| · Citric acid ester (AS3, manufactured by Sankyo Chemical Co., Ltd.) | 1.2 parts by mass |
| · Photopolymerization initiator (IRGACURE 2959, manufactured by BASF SE) | 0.84 parts by mass |
| · Glutaraldehyde | 2.8 parts by mass |
| · Water | 699 parts by mass |
| · Methanol | 226 parts by mass |

### (Modified Polyvinyl Alcohol)

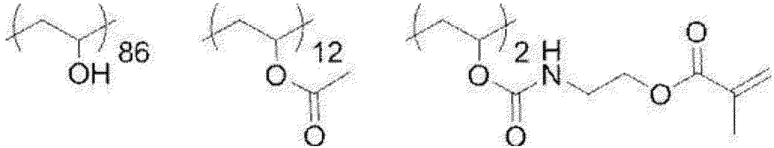

### (Production of Reflective Film)

The alignment film produced as described above was subjected to a rubbing treatment (rayon cloth, pressure: 0.1 kgf (0.98 N), rotation speed: 1,000 revolutions per minute (rpm), transportation speed: 10 m/min, number of times: 1 round trip) in a direction rotated clockwise by 45° with respect to a long side direction of a base material.

The composition IR1 for forming a reflective layer was applied onto the rubbed surface of the alignment film described above at room temperature using a wire bar, such that a thickness of a dry film after drying was 0.4 µm, to obtain a coating layer.

The coating film was dried at room temperature for 30 seconds and then heated in an atmosphere of 85°C for 2 minutes. Thereafter, in an environment with an oxygen concentration of 1,000 ppm or less, a D bulb (90 mW/cm lamp) manufactured by Fusion Co., Ltd. was used for irradiation with ultraviolet rays at 60°C and an output of 60% for 6 to 12 seconds to immobilize a cholesteric liquid crystalline phase, thereby obtaining a cholesteric liquid crystal layer IR1 having a thickness of 0.4 µm.

Next, the same process was repeated on the surface of the obtained cholesteric liquid crystal layer IR1 using the composition BG1 for forming a reflective layer, thereby laminating a cholesteric liquid crystal layer BG1 having a thickness of 0.84 µm thereon.

Next, the same process was repeated on the surface of the obtained cholesteric liquid crystal layer BG1 using the composition R1 for forming a reflective layer, thereby laminating a cholesteric liquid crystal layer R1 having a thickness of 0.36 µm thereon.

In this way, a film A1 having a configuration of R1/BG1/IR1/transparent resin layer 1 was obtained. In a case where a transmission spectrum of the film A1 was measured with a spectrophotometer (manufactured by JASCO Corporation, V-670), transmission spectra having selective reflection center wavelengths at 515 nm, 685 nm, and 775 nm were obtained.

### <Formation of Hard Coat Layer>

The curable composition HC-1 for forming an HC layer was applied onto a surface of the film A1 opposite to the liquid crystal layer in the same manner as in the base material 7 and cured to form an HC1 layer having a film thickness of 6 µm, thereby obtaining a film HC2 having a configuration of HC layer/transparent resin layer 1/IR1/BG1/R1.

After peeling off the heavy release film of the protective film P-4, the exposed pressure-sensitive adhesive layer was bonded to the HC layer side of the film HC2 while applying a load of 2 kg with a rubber roller such that the surfaces were in contact with each other, thereby producing a base material 8 having a configuration of PET film/pressure-sensitive adhesive layer/HC layer/transparent resin layer 1/IR1/BG1/R1.

### <Production of Base Material 9>

A base material 9 having a configuration of PET film/pressure-sensitive adhesive layer/HC layer/transparent resin layer 1/A1/IR1/BG1/R1 was produced in the same manner as in the base material 8, except that the composition A1 for forming a retardation layer was applied onto the rubbed surface of the alignment film using a wire bar, dried, and cured under the following conditions, and the composition IR1 for forming a reflective layer was applied onto the cured retardation layer A1.

### (Curing Conditions of Composition A1 for Forming Retardation Layer)

The composition A1 for forming a retardation layer was applied and dried to obtain a coating film, which was placed on a hot plate at 50°C, and irradiated with ultraviolet rays for 6 seconds using an electrodeless lamp "D bulb" (60 mW/cm²) manufactured by Fusion Co., Ltd. in an environment with an oxygen concentration of 1,000 ppm or less to form a retardation layer. As a result, a retardation layer having a desired front phase difference, that is, a thickness adjusted to obtain a desired retardation was obtained.

In a case where the retardation of the produced retardation layer at 550 nm was measured with AxoScan manufactured by Axometrics, Inc., it was 126 nm.

### <Production of Base Material 10>

A laminate of a base material 11 having a configuration of PET film/pressure-sensitive adhesive layer/HC layer/transparent resin layer 1/A1/IR1/BG1/R1/TW1 was produced in the same manner as in the base material 9, except that the polarization conversion layer TW1 was applied onto the cholesteric liquid crystal layer R1 such that the thickness was 1.5 µm.

For the polarization conversion layer TW1, a composition TW1 for forming a polarization conversion layer was applied onto the cholesteric liquid crystal layer R1 at room temperature using a wire bar, and the coating film was dried at room temperature for 30 seconds and heated in an atmosphere of 85°C for 2 minutes. Thereafter, in an environment with an oxygen concentration of 1,000 ppm or less, the coating film was irradiated with ultraviolet rays at 60°C for 6 to 12 seconds at an output of 60% by a D bulb (90 mW/cm lamp) manufactured by Fusion UV Systems, Inc. to form a polarization conversion layer.

### <Production of Base Material 11>

A base material 11 was produced as follows based on the method described in JP1997-506837A (JP-H9-506837A).

2,6-Polyethylene naphthalate (PEN) and copolyester (coPEN) of naphthalate 70/terephthalate 30 were synthesized in a standard polyester resin synthesis oven using ethylene glycol as a diol. A monolayer film of PEN and coPEN was extrusion-molded, then stretched at about 150°C and a stretching ratio of 5:1, and heat-treated at about 230°C for 30 seconds. It was confirmed that a refractive index of the PEN with respect to the slow axis (alignment axis) was about 1.86, a refractive index with respect to the transverse axis was 1.64, and a refractive index of the coPEN film was about 1.64.

Next, the stretching ratio was adjusted, and it was confirmed that a refractive index of the PEN with respect to the slow axis was about 1.71, a refractive index with respect to the transverse axis was 1.64, and a refractive index of the coPEN film was about 1.64. That is, a difference Δn between the refractive index of the optically anisotropic layer in the slow axis direction and the refractive index of the isotropic layer is 0.07.

Subsequently, PEN and coPEN were coextruded with a 25-slot supply block equipped with a standard extrusion die to form a layer that is composed of 16 layers with PEN and coPEN being alternately laminated and that has a film thickness illustrated in (1) of Table 3 below. Further, by repeating the same operation, 16 layers of PEN and coPEN having thicknesses shown in (2) to (6) of Table 3 below were alternately formed in order, thereby producing a laminate in which a total of 96 layers were laminated.

**[Table 3]**

| | | (1) | (2) | (3) | (4) | (5) | (6) |
|---|---|---|---|---|---|---|---|
| PEN | Film thickness | 65.8nm | 80.4nm | 95.0nm | 102.3nm | 109.6nm | 117.Onm |
| coPEN | Film thickness | 68.6nm | 83.8nm | 99.1nm | 106.7nm | 114.3nm | 122.Onm |
| Number of layers | | 16 layers | 16 layers | 16 layers | 16 layers | 16 layers | 16 layers |

Next, the stretched laminate was heat-treated in an air oven at about 230°C for 30 seconds to produce a base material 11. A thickness of the produced base material 11 was 50 µm. In a case where a reflection spectrum of the base material 11 was measured with a spectrophotometer (manufactured by JASCO Corporation, V-670), a reflection spectrum having a reflectance peak at reflection bands of 450 nm, 550 nm, 650 nm, 700 nm, 750 nm, and 800 nm was obtained.

### <Production of Base Material 12>

A base material 12 was produced in the same manner as the base material 11, except that the thickness was set to 100 µm.

### <Production of Base Material 13>

A base material 13 was produced in the same manner as the base material 1, except that the protective film P-7 was used instead of the protective film P-1.

### [Example 1]

### <Preparation of Composition for Forming Adhesive Layer>

Each component was mixed according to the formulation shown in Table 4 below and filtered through a polypropylene filter having a pore diameter of 10 µm to prepare compositions HS1 to HS5 for forming an adhesive layer.

The blending amount of each component shown in Table 4 is represented in part by mass.

**[Table 4]**

| | Composition for forming adhesive layer | HS1 | HS2 | HS3 | HS4 | HS5 |
|---|---|---|---|---|---|---|
| Thermoplastic resin | KURARITY LA4285 (manufactured by Kuraray Co., Ltd.) | 4.40 | 4.85 | 4.775 | 4.60 | 4.60 |
| Polymerization initiator | IRGACURE 127 (manufactured by BASF SE) | 0.100 | 0.100 | 0.100 | 0.100 | 0.100 |
| Silica particle | AEROSIL RX300 (manufactured by NIPPON AEROSIL CO., LTD.) | 0.500 | 0.500 | | | |
| Resin particle | MX-180TA (manufactured by Soken Chemical & Engineering Co., Ltd.) | | 0.050 | 0.050 | 0.050 | 0.050 |
| Antistatic agent | N8-2-1 (manufactured by Nagase ChemteX Corporation, polythiophene-based conductive polymer) | | | 0.075 | 0.250 | |
| | Acrit 1SX-1055F (manufactured by Taisei Fine Chemical Co., Ltd., quaternary ammonium salt type antistatic polymer) | | | | | 0.250 |
| Solvent | Methyl ethyl ketone (MEK) | 47.50 | 47.50 | 47.50 | 47.50 | 47.50 |
| | Butyl acetate | 47.50 | 47.50 | 47.50 | 47.50 | 47.50 |

### [Production of Laminate]

### <Formation of Adhesive Layer>

The composition HS1 for forming an adhesive layer was applied onto a surface of the base material 1 (polyethylene film/pressure-sensitive adhesive layer/transparent resin layer 1) opposite to the protective film P-1 (polyethylene film/pressure-sensitive adhesive layer) using a wire bar such that the film thickness after drying was 0.5 µm, and then the coating film was dried at 120°C for 1 minute to form a coating film.

Thereafter, the coating film was further irradiated with ultraviolet rays at an illuminance of 150 mW/cm² and an irradiation amount of 300 mJ/cm² using an air-cooled metal halide lamp (manufactured by Eye Graphics Co., Ltd.) at an oxygen concentration of about 0.1% by volume and 160 W/cm under nitrogen purging, and the coating film was cured to produce a laminate of Example 1 having a configuration of the protective film P-1/transparent resin layer/adhesive layer.

### [Examples 2 to 6 and 13 to 16]

Laminates of Examples 2 to 6 and 13 to 16 were produced in the same manner as in Example 1, except that the base materials 2 to 10 were used instead of the base material 1.

### [Example 7]

A laminate of Example 7 was produced in the same manner as in Example 1, except that the composition for forming an adhesive layer was applied such that the thickness of the adhesive layer was 1.0 µm.

### [Example 8]

A laminate of Example 8 was produced in the same manner as in Example 1, except that the composition for forming an adhesive layer was applied such that the thickness of the adhesive layer was 5.0 µm.

### [Example 9]

A laminate of Example 9 was produced in the same manner as in Example 1, except that the composition for forming an adhesive layer was applied such that the thickness of the adhesive layer was 10.0 µm.

### [Example 10]

A laminate of Example 10 was produced in the same manner as in Example 1, except that the composition for forming an adhesive layer was applied such that the thickness of the adhesive layer was 20.0 µm.

### [Example 11]

A laminate of Example 11 was produced in the same manner as in Example 4, except that the composition for forming an adhesive layer was applied such that the thickness of the adhesive layer was 10.0 µm.

### [Example 12]

A laminate of Example 12 was produced in the same manner as in Example 5, except that the composition for forming an adhesive layer was applied such that the thickness of the adhesive layer was 20.0 µm.

### [Example 17]

A laminate of Example 17 having a base material 11/adhesive layer configuration was produced in the same manner as in Example 9, except that the base material 11 was used instead of the base material 1.

### [Example 18]

A laminate of Example 18 was produced in the same manner as in Example 17, except that the composition for forming an adhesive layer was applied such that the thickness of the adhesive layer was 50.0 µm.

### [Example 19]

A laminate of Example 19 having a base material 12/adhesive layer configuration was produced in the same manner as in Example 18, except that the base material 12 was used instead of the base material 11.

### [Comparative Example 1]

A laminate of Comparative Example 1 was produced in the same manner as in Example 1, except that the base material 13 was used instead of the base material 1.

### [Evaluation]

### [Measurement of Oxygen Permeability Coefficient]

The oxygen permeability coefficient was measured as follows based on ISO 15105-2 (equal pressure method).

The base materials of Examples and Comparative Example were attached to an electrode of a tester (oxygen concentration meter model 3600, manufactured by Hach Ultra Analytics) with silicone grease at 25°C and 50% RH, purged with N₂ for 2 hours, and then opened to the atmosphere and allowed to stand for 90 minutes until the oxygen concentration reached a steady state. In a case where the oxygen concentration did not reach a steady state in 90 minutes, the oxygen concentration was allowed to stand for another 90 minutes. The oxygen permeability coefficient of the base material was calculated from the amount of oxygen reaching the electrode in the steady state. The results are shown in Table 5 below.

### [Measurement of tensile elastic modulus]

The tensile elastic modulus was measured according to the method described in JIS K7127 by the following method. The results are shown in Table 5 below.

Sample pieces having a width of 10 mm and a length of 150 mm, in which the length direction was along each direction rotated clockwise by 45° from one direction with respect to one direction of the in-plane direction of the laminate of Examples and Comparative Example as a reference, were cut out, and the cut-out sample pieces were installed in a tensile tester (manufactured by Toyo Seiki Seisaku-sho, Ltd., trade name "STROGRAPH-R2") such that the chuck interval in the measurement direction was 100 mm, and the sample pieces were stretched at a stretching speed of 300 mm/min under the condition of a measurement temperature of 25°C such that the chuck interval was widened, thereby obtaining a stress-strain curve. The tensile elastic modulus was calculated by linear regression of the curve between the specified strains ε1 = 0.0005 and ε2 = 0.0025.

In a case where the in-plane direction of the laminate corresponding to the length direction of the test piece having the maximum tensile elastic modulus among the tensile elastic moduli of the above-described sample pieces is defined as a first direction, and a direction orthogonal to the first direction is defined as a second direction, the average value of the tensile elastic modulus in the first direction and the tensile elastic modulus in the second direction is defined as the average tensile elastic modulus of the laminate.

### [Measurement of film thickness]

A "film thickness" was measured by observing with a scanning electron microscope (SEM) by the following method.

The cross section of the laminate of Examples and Comparative Example was exposed by a conventional method such as an ion beam or a microtome, and then the exposed cross section was observed by SEM. In the cross-sectional observation, the film thickness of the laminate was obtained as an arithmetic average of the film thicknesses at three equal division points excluding both ends in a case where the width direction of the laminate was divided into four equal parts. The results are shown in Table 5 below.

### [Evaluation of Air Bubble-like Defects]

The evaluation of the air bubble-like defects is as follows.

In an environment of cleanliness 1,000, the laminates of Examples and Comparative Example having a size of 90 mm in length × 90 mm in width were disposed on a flat glass plate having a size of 100 mm in width × 100 mm in length, with the surface on the adhesive layer side as a contact surface, at the center portion of the glass substrate. The front and back surfaces of the laminate and the glass were cleaned with a pressure-sensitive adhesive roller, only the dust adhering to the pressure-sensitive adhesive roller was removed, and the dust not adhering to the pressure-sensitive adhesive roller was left without being removed.

The laminate was put into a rubber bag, and the pressure was reduced to 10 kPa (0.1 atm) with a vacuum pump. Thereafter, the temperature was raised to 95°C under reduced pressure, held for 20 minutes, and then returned to normal temperature and normal pressure. Thereafter, the laminate was held in an autoclave (manufactured by Kurihara Seisakusho Co., Ltd.) at 130°C and 1.1 MPa (11 atm) for 20 minutes to adhere the laminate and the glass substrate to each other with the adhesive layer, thereby obtaining a glass sample. For the laminate on which the protective film was laminated, the protective film was peeled off after the autoclave treatment.

A central portion of 5 cm□ of the glass sample was observed with an optical microscope for air bubble-like defects caused by dust, and evaluated according to the following standard. The results are shown in Table 5 below.
A: no air bubble-like defect having a diameter of 100 µm or more was present.
B: number of air bubble-like defects having a diameter of 100 µm or more was 1 to 5.
C: number of air bubble-like defects having a diameter of 100 µm or more was 6 to 15.
D: number of air bubble-like defects having a diameter of 100 µm or more was 16 to 30.
E: number of air bubble-like defects having a diameter of 100 µm or more was 31 or more.

### [Evaluation of Wrinkles]

The evaluation of wrinkles was as follows.

A laminate of Examples and Comparative Examples having a length of 260 mm and a width of 330 mm was disposed on a concave side of a curved glass having a width of 330 mm and a length of 260 mm, with a curvature of R1750 mm in the 330 mm longitudinal direction and R1250 mm in the 260 mm lateral direction, with the surface on the adhesive layer side as a contact surface, at the center portion of the glass substrate.

The laminate was put into a rubber bag, and the pressure was reduced to 10 kPa (0.1 atm) with a vacuum pump. Thereafter, the temperature was raised to 115°C under reduced pressure, held for 60 minutes, and then returned to normal temperature and normal pressure. Thereafter, the laminate was held in an autoclave (manufactured by Kurihara Seisakusho Co., Ltd.) at 140°C and 1.3 MPa (13 atm) for 60 minutes to remove air bubbles, thereby producing a glass sample in which the laminate and the glass substrate were bonded to each other by the adhesive layer.

The above-described glass sample was evaluated according to the following standard. The results are shown in Table 5 below.
A: no wrinkles were present.
B: wrinkles were present, but the number of wrinkles was 2 or less.
C: the number of wrinkles was more than 2.

**[Table 5]**

| | Configuration | | | | | | | | Measurement | | | | | Evaluation | |
|---|---|---|---|---|---|---|---|---|---|---|---|---|---|---|---|
| | Base material number | Protective film | HC layer | Transparent resin layer | Retardation layer | Reflective layer | Polarization conversion layer | Adhesive layer | Oxygen permeability coefficient of base material (cc/m²-day-atm) | Film thickness of adhesive layer (µm) | Average tensile modulus of laminate [GPa] | Thickness of laminate (µm) | Bending stiffness coefficient 5 of laminate (× 10⁶ GPa·µm³) | Air bubble-like defects | Wrinkles |
| Example 1 | 1 | P-1 | - | 1 | | | | HS1 | 241 | 0.1 | 1.2 | 340 | 50 | D | A |
| Example 2 | 2 | P-2 | | 1 | | | | HS1 | 89 | 0.1 | 3.7 | 68 | 1 | C | c |
| Example 3 | 3 | P-3 | | 1 | | | | HS1 | 21 | 0.1 | 3.3 | 127 | 7 | B | B |
| Example 4 | 4 | P-4 | | 1 | | | | HS1 | 13 | 0.1 | 3.2 | 177 | 18 | A | A |
| Example 5 | 5 | P-5 | | 1 | | | | HS1 | 6 | 0.1 | 3.1 | 302 | 84 | A | A |
| Example 6 | 6 | P-6 | | 3 | | | | HS1 | 0.1 | 0.1 | 3.7 | 64 | 1 | A | C |
| Example 7 | 1 | P-1 | | 1 | | | | HS1 | 241 | 1.0 | 1.2 | 353 | 54 | C | A |
| Example 8 | 1 | P-1 | | 1 | | | | HS1 | 241 | 5.0 | 1.2 | 357 | 56 | C | A |
| Example 9 | 1 | P-1 | | 1 | | | | HS1 | 241 | 10.0 | 1.2 | 362 | 57 | B | A |
| Example 10 | 1 | P-1 | | 1 | | | | HS1 | 241 | 20.0 | 1.2 | 372 | 61 | A | A |
| Example 11 | 4 | P-4 | | 1 | | | | HS1 | 13 | 100 | 3.0 | 187 | 20 | A | A |
| Example 12 | 5 | P-5 | | 1 | | | | HS1 | 6 | 200 | 3.2 | 382 | 178 | A | A |
| Example 13 | 7 | P-4 | HCl | 1 | | | | HS1 | 12 | 1.0 | 3.7 | 184 | 19 | A | A |
| Example 14 | 8 | P-4 | HCl | 1 | | R1+BG1 +IR1 | | HS1 | 12 | 1.0 | 3.2 | 185 | 20 | A | A |
| Example 15 | 9 | P-4 | HCl | 1 | A1 | R1+BG1 +IR1 | | HS1 | 12 | 1.0 | 3.1 | 186 | 20 | A | A |
| Example 16 | 10 | P-4 | HCl | 1 | A1 | R1+BG1+IR1 | TW1 | HS1 | 12 | 1.0 | 3.1 | 188 | 20 | A | A |
| Example 17 | 11 | | | 2 | | | | HS1 | 10 | 10.0 | 2.5 | 60 | 1 | A | C |
| Example 18 | 11 | | | 2 | | | | HS1 | 10 | 50.0 | 1.6 | 100 | 2 | A | C |
| Example 19 | 12 | | | 3 | | | | HS1 | 5 | 50.0 | 2.0 | 150 | 7 | A | B |
| Comparative Example 1 | 13 | P-7 | | 1 | | | | HS1 | 301 | 0.1 | 1.4 | 240 | 20 | E | A |

### [Example 101]

A laminate of Example 101 was obtained in the same manner as in Example 16, except that, in the formation of the adhesive layer, HS2 was used instead of the composition HS1 for forming an adhesive layer.

### [Example 102]

The laminate of Example 16 was subjected to a blast treatment (time: 1 second) on the adhesive layer side, thereby obtaining a laminate of Example 102.

### [Example 103]

The laminate of Example 16 was laminated on a flat plate glass having a thickness of 4 mm such that the protective film side was in contact with the glass, the laminate of Example 16 was further laminated on the adhesive layer side such that the embossed surface of a paper release liner (Loparex LLC, Hammond, WI) subjected to an embossing treatment was in contact with the laminate, and a flat plate glass having a thickness of 4 mm was further laminated on a side opposite to the embossed surface of the paper release liner.

The laminate was put into a rubber bag, and the pressure was reduced to 10 kPa (0.1 atm) with a pump. Thereafter, the temperature was raised to 100°C under reduced pressure, held for 10 minutes, and then returned to normal temperature and normal pressure, and the flat plate glass and the paper release liner were removed, thereby obtaining a laminate of Example 103.

The surface structure of the embossed surface of the paper release liner was transferred to the adhesive layer of the laminate of Example 103.

### [Evaluation of Air Bubble Residue]

The evaluation of the air bubble residue was as follows.

A laminate of Examples and Comparative Examples having a length of 260 mm and a width of 330 mm was disposed on a concave side of a curved glass having a width of 330 mm and a length of 260 mm, with a curvature of R1750 mm in the 330 mm longitudinal direction and R1250 mm in the 260 mm lateral direction, with the surface on the adhesive layer side as a contact surface, at the center portion of the glass substrate.

The laminate was put into a rubber bag, and the pressure was reduced to 10 kPa (0.1 atm) with a vacuum pump. Thereafter, the temperature was raised to 95°C under reduced pressure, held for 20 minutes, and then returned to normal temperature and normal pressure. Thereafter, the laminate was held in an autoclave (manufactured by Kurihara Seisakusho Co., Ltd.) at 130°C and 1.1 MPa (11 atm) for 20 minutes, rapidly depressurized at 100°C, and returned to normal temperature and normal pressure, and the laminate and the glass substrate were bonded to each other with the adhesive layer to obtain a glass sample.

The above-described glass sample was evaluated according to the following standard. The results are shown in Table 6 below.
A: no air bubbles having a diameter of 1 mm or more were present.
B: one or more air bubble-like defects having a diameter of 1 mm or more were present.

| | Configuration | | | | | | | | Measurement | | | | | Evaluation | | |
|---|---|---|---|---|---|---|---|---|---|---|---|---|---|---|---|---|
| | Base material number | Protective film | HC layer | Transparent resin layer | Retardation layer | Reflective layer | Polarization conversion layer | Adhesive layer | Oxygen permeability coefficient of base material (cc/m² day-atm) | Film thickness of adhesive layer (µm) | Average tensile modulus of laminate [GPa] | Thickness of laminate (µm) | Bending stiffness coefficient S of laminate (× 10⁶ GPa·µm³) | Air bubble-like defects | Wrinkles | Oxygen permeability coefficient of base material (cc/rn²-day ann) |
| Example 16 | 10 | P-4 | HCl | 1 | A1 | R1+BG1+IR1 | TW1 | HS1 | 12 | 1.0 | 3.1 | 188 | 20 | A | B | A |
| Example 101 | 10 | P-4 | HCl | 1 | A1 | R1+BG1 +IR1 | TW1 | HS2 | 12 | 1.0 | 3.1 | 188 | 20 | A | A | A |
| Example 102 | 10 | P-4 | HCl | 1 | A1 | R1+BG1 +IR1 | TW1 | HS1 | 12 | 1.0 | 3.1 | 188 | 20 | A | A | A |
| Example 103 | 10 | P-4 | HCl | 1 | A1 | R1+BG1 +IR1 | TW1 | HS1 | 12 | 1.0 | 3.1 | 188 | 20 | A | A | A |

### [Example 201]

### [Production of Laminated Glass]

A laminate was produced to have a structure of adhesive layer (heat seal layer)/base material layer/A1 (retardation layer)/IR1/BG1/R1/TW1 (polarization conversion layer) using a PET film (Lumirror T60, manufactured by Toray Industries, Inc.) having a thickness of 125 µm as the base material layer. That is, a laminate was produced by the same method as in Example 16, except that the position of the adhesive layer was changed. It was confirmed that the produced laminate had the same effect as in Example 16.

Next, the laminate (220 mm in length × 290 mm in width) produced above was disposed on a convex curved glass substrate having a layer configuration of 260 mm in length × 330 mm in width and a thickness of 2 mm, with the surface on the adhesive layer (heat seal layer) side as a contact surface, at the center portion of the glass substrate. In this manner, a laminate having a first glass substrate, a heat seal layer, a base material layer, a retardation layer, a selective reflective layer, and a polarization conversion layer in this order was formed.

A PVB film (interlayer film) having a length of 260 mm, a width of 330 mm, and a thickness of 0.76 mm, manufactured by Sekisui Chemical Co., Ltd., was disposed on the laminate, and a convex curved glass substrate (second glass substrate) having a length of 260 mm, a width of 330 mm, and a thickness of 2 mm was further disposed thereon. The laminate was held at 115°C and 10 kPa (0.1 atm) for 1 hour, subjected to an evaluation of air release described later, and then heated in an autoclave (manufactured by Kurihara Seisakusho Co., Ltd.) at 140°C and 1.3 MPa (13 atm) for 60 minutes to remove air bubbles, thereby producing a laminated glass.

### [Examples 202 to 205 and Comparative Example 301]

A laminated glass was produced by the same method as in Example 201, except that the base material layer in the laminate produced in Example 201 was changed to the base material shown in Table 7. It was confirmed that the laminates produced in Examples 202 to 205 had the same effect as in Example 16.

### [Example 206]

Toretec 7832C (manufactured by Toray Advanced Film Co., Ltd.) was bonded to the TW1 (polarization conversion layer) side of the laminate of Example 201 such that the pressure-sensitive adhesive layer of Toretec 7832C was on the TW1 side, thereby producing a laminate having an adhesive layer (heat seal layer)/base material layer/A1 (retardation layer)/IR1/BG1/R1/TW1 (polarization conversion layer)/Toretec 7832C in this order. It was confirmed that the produced laminate had the same effect as in Example 16.

Next, the laminate (220 mm in length × 290 mm in width) produced above was disposed on a convex curved glass substrate having a layer configuration of 260 mm in length × 330 mm in width and a thickness of 2 mm, with the surface on the adhesive layer (heat seal layer) side as a contact surface, at the center portion of the glass substrate. Thereafter, Toretec 7832C was peeled off from the laminate to form a laminate having a first glass substrate, a heat seal layer, a base material layer, a retardation layer, a selective reflective layer, and a polarization conversion layer in this order.

A PVB film (interlayer film) having a length of 260 mm, a width of 330 mm, and a thickness of 0.76 mm, manufactured by Sekisui Chemical Co., Ltd., was disposed on the laminate, and a convex curved glass substrate (second glass substrate) having a length of 260 mm, a width of 330 mm, and a thickness of 2 mm was further disposed thereon. The laminate was held at 115°C and 10 kPa (0.1 atm) for 1 hour, subjected to an evaluation of air release described later, and then heated in an autoclave (manufactured by Kurihara Seisakusho Co., Ltd.) at 140°C and 1.3 MPa (13 atm) for 60 minutes to remove air bubbles, thereby producing a laminated glass.

Regarding the produced laminated glass, during the production of the laminated glass, after heating at 140°C and 1.3 MPa (13 atm) for 60 minutes, the size and the number of dents (streaks) formed by the crushing of air bubbles larger than 1 mm in the laminated glass were visually measured and evaluated according to the following standard. The results are shown in Table 7 below. The evaluation C or higher was regarded as pass. The better the evaluation, the better the air release.
A: there was no dent formed by the collapse of air bubbles larger than 1 mm.
B: 1 to 5 dents formed by the collapse of air bubbles larger than 1 mm were present.
C: 6 to 20 dents formed by the collapse of air bubbles larger than 1 mm were present.
D: 21 dents or more formed by the collapse of air bubbles larger than 1 mm were present.

**[Table 7]**

| | Configuration of base material layer | | | Oxygen permeability coefficient | Bubble streak defect |
|---|---|---|---|---|---|
| | Constituent polymer | Product name | Film thickness [µm] | [cc/m²·day·atm] | |
| Example 201 | PET | Lumirror T60 #125 | 125.0 | 16 | A |
| Example 202 | PET | Lumirror T60 #50 | 50.0 | 40 | A |
| Example 203 | PET | Lumirror T60 #25 | 25.0 | 80 | A |
| Example 204 | PET | Lumirror S10 #16 | 16.0 | 125 | B |
| Example 205 | PET | Lumirror T70 #12 | 12.0 | 167 | C |
| Example 206 | PET | Lumirror T60 #125 | 125.0 | 16 | A |
| Comparative Example 301 | TAC | Transparent resin layer 1 | 40.0 | 675 | D |

### [Examples 401 to 403]

Laminates of Examples 401 to 403 were obtained in the same manner as in Example 101, except that, in the formation of the adhesive layer, HS3 to HS5 were used instead of the composition HS2 for forming an adhesive layer.

### [Measurement of Surface Electrical Resistance Value of Adhesive Layer]

The evaluation of the surface electrical resistance value of the adhesive layer was as follows.

For the laminates of Examples 101 and 401 to 403, the surface electrical resistance value of the adhesive layer was measured using a resistivity meter (HIRESTA-UX MCP-HT800, manufactured by Mitsubishi Chemical Analytech Co., Ltd.) under an applied voltage of 1,000 V after the humidity adjustment for 24 hours under the conditions of a temperature of 23°C and a humidity of 55%. The results are shown in Table 8 below.

### [Evaluation of Air Bubble-like Defects in Non-Clean Environment]

The evaluation of the air bubble-like defects is as follows.

In an environment with cleanliness of 10,000, the laminates of Examples 101 and 401 to 403 having a size of 90 mm in length × 90 mm in width were disposed on a flat glass plate having a size of 100 mm in width × 100 mm in length, with the surface on the adhesive layer side as a contact surface, at the center portion of the glass substrate. The front and back surfaces of the glass were cleaned with a pressure-sensitive adhesive roller, and only the dust adhering to the pressure-sensitive adhesive roller was removed, and the dust not adhering to the pressure-sensitive adhesive roller was left as it was without being removed.

The laminate was put into a rubber bag, and the pressure was reduced to 10 kPa (0.1 atm) with a vacuum pump. Thereafter, the temperature was raised to 95°C under reduced pressure, held for 20 minutes, and then returned to normal temperature and normal pressure. Thereafter, the laminate was held in an autoclave (manufactured by Kurihara Seisakusho Co., Ltd.) at 130°C and 1.1 MPa (11 atm) for 20 minutes to adhere the laminate and the glass substrate to each other with the adhesive layer, thereby obtaining a glass sample. For the laminate on which the protective film was laminated, the protective film was peeled off after the autoclave treatment.

A central portion of 5 cm□ of the glass sample was observed with an optical microscope for air bubble-like defects caused by dust, and evaluated according to the following standard. The results are shown in Table 8 below.
A: no air bubble-like defect having a diameter of 100 µm or more was present.
B: number of air bubble-like defects having a diameter of 100 µm or more was 1 to 15.
C: number of air bubble-like defects having a diameter of 100 µm or more was 16 or more.

| | Configuration | | | | | | | | Measurement | | | | | | Evaluation | | |
|---|---|---|---|---|---|---|---|---|---|---|---|---|---|---|---|---|---|
| | Base material number | Protective film | HC layer | Transparent resin layer | Retardation layer | Reflective layer | Polarization conversation layer | Adhesive layer | Oxygen permeability coefficient of base material (cc/m²-day- atm) | Film chickness of adhesive layer (µm) | Average tensile modulus of laminate [GPa] | Thickness of laminate (µm) | Bending stiffness coefficient S of laminate (× 10⁶ GPa·µm³) | Surface electrical resistance value of adhesive layer (Ω/□) | Air bubble-like defects | Wrinkles | Air bubble-like defects in non-clean environment |
| Example 101 | 10 | P-4 | HCl | 1 | A1 | R1+BG1+IR1 | TW1 | HS2 | 12 | 1.0 | 31 | 188 | 20 | 2.4×10^15 | A | A | c |
| Example 401 | 10 | P-4 | HCl | 1 | A1 | R1+BG1+IR1 | TW1 | HS3 | 12 | 1.0 | 3.1 | 188 | 10 | 2.8×10^13 | A | A | B |
| Example 402 | 10 | P-4 | HCl | 1 | A1 | R1+BG1+IR1 | TW1 | HS4 | 12 | 1.0 | 3.1 | 188 | 20 | 2.4×10^10 | A | A | A |
| Example 403 | 10 | P-4 | HCl | 1 | A1 | R1+BG1+IR1 | TW1 | HS5 | 12 | 1.0 | 3.1 | 188 | 20 | 6.2×10^10 | A | A | A |

### Explanation of References

10, 10A, 10B, 100: laminate
11: base material
12: protective film
14: hard coat layer
16: transparent resin layer
18: retardation layer
19: interlayer
20: reflective layer
24: polarization conversion layer
26: adhesive layer
27A, 27B: glass
28: windshield glass
30: head-up display system (HUD)
32: projector
34: image forming unit
36: intermediate image screen
38: mirror
40: concave mirror
42: dashboard
46: transmission window
50: liquid crystal display (LCD)
52: projection lens
102: adherend
104: mold
106: bag
D: driver

## Claims

1. A laminate comprising:
a base material; and
an adhesive layer,
wherein an oxygen permeability coefficient of the base material is 300 cc/m²·day·atm or less.

2. The laminate according to claim 1,
wherein a film thickness of the adhesive layer is 0.1 µm or more.

3. The laminate according to claim 1,
wherein a bending stiffness coefficient S represented by Equation 1 is 0.4 × 10⁶ [GPa·µm³] or more,
Equation 1 Bending stiffness coefficient S = average tensile modulus [GPa] of the laminate × (thickness [µm] of the laminate)³.

4. The laminate according to claim 1,
wherein the base material includes a protective film and a transparent resin layer.

5. The laminate according to claim 1,
wherein the base material further includes a reflective layer.

6. The laminate according to claim 1,
wherein the base material further includes a retardation layer.

7. The laminate according to claim 1,
wherein the base material further includes a polarization conversion layer.

8. The laminate according to claim 1,
wherein the base material further includes a hard coat layer.

9. The laminate according to claim 4,
wherein the base material further includes a hard coat layer, a reflective layer, a retardation layer, and a polarization conversion layer.

10. The laminate according to claim 1,
wherein the adhesive layer includes an antistatic agent.

11. The laminate according to claim 10,
wherein a surface electrical resistance value of the adhesive layer is 1.0 × 10¹⁴ Ω/□ or less.

12. The laminate according to claim 1,
wherein the base material includes at least a resin base material.

13. The laminate according to any one of claims 1 to 12,
wherein the laminate is bonded to glass through the adhesive layer.

14. The laminate according to any one of claims 1 to 12,
wherein the laminate is bonded to a windshield glass through the adhesive layer.

15. A bonded body comprising:
glass; and
the laminate according to any one of claims 1 to 12 that is bonded to the glass.

16. The bonded body according to claim 15, further comprising:
glass on a side of the laminate opposite to a side to which the glass is bonded.

17. A bonded body comprising:
a windshield glass; and
the laminate according to any one of claims 1 to 12 that is bonded to the windshield glass.

18. The bonded body according to claim 17, further comprising:
windshield glass on a side of the laminate opposite to a side to which the windshield glass is bonded.

19. An image display system comprising:
the laminate according to any one of claims 1 to 12; and
an image display device that projects an image onto the laminate.

20. A manufacturing method of a bonded body, comprising:
a step 1 of laminating an adherend having a curved shape and the laminate according to any one of claims 1 to 12 such that the adhesive layer of the laminate is on a side of the adherend, accommodating the adherend and the laminate in a bag, and reducing a pressure in the bag to obtain a bonded body by causing the laminate to follow the curved shape without using a mold having a surface corresponding to the curved shape; and
a step 2 of thermocompression-bonding the bonded body obtained in the step 1.
